# EUROPEAN PATENT APPLICATION

(11) **EP 4 465 375 A1**
(43) Date of publication of application: **20.11.2024**
(21) Application number: 24165565.3
(22) Date of filing: 22.03.2024
(51) Int. Cl.: H01M 4/04, H01M 4/139, B05C 1/08

(54) **METHOD OF PREPARING DRY ELECTRODE, DEVICE FOR MANUFACTURING DRY ELECTRODE, DRY ELECTRODE, AND LITHIUM BATTERY**

(30) Priority: 26.03.2023 KR 20230039365; 06.07.2023 KR 20230087959
(71) Applicant: Samsung SDI Co., Ltd., Yongin-si, Gyeonggi-do 17084 (KR)
(72) Inventor: LEE, Jinhyon, 17084 Yongin-si (KR); KWON, Ilkyong, 17084 Yongin-si (KR); NAM, Hyun, 17084 Yongin-si (KR); LEE, Donggeun, 17084 Yongin-si (KR); PYUN, Ahram, 17084 Yongin-si (KR); YOON, Yeonhee, 17084 Yongin-si (KR); BANG, Youmin, 17084 Yongin-si (KR); KWON, Seunguk, 17084 Yongin-si (KR); CHOI, Jongsup, 17084 Yongin-si (KR); KIM, Seongdae, 17084 Yongin-si (KR)
(74) Representative: Marks & Clerk LLP

(57) **Abstract**

A method of preparing a dry electrode, a device for manufacturing a dry electrode, a dry electrode, and a lithium battery are provided. The method includes supplying a metal layer at a first speed, supplying a dry electrode film at a second speed while supplying the dry electrode film intermittently at a third speed less than the second speed, and forming a dry electrode active material layer by intermittently disposing the dry electrode film on at least one side (e.g., one side or both opposite sides) of the metal layer, wherein the dry electrode film is disposed on the metal layer while the dry electrode film is being supplied at the second speed, and the dry electrode film is not disposed on the metal layer while the dry electrode film is being supplied at the third speed.

## Description

### BACKGROUND

### 1. Field

One or more embodiments relate to a method of preparing a dry electrode, a device for manufacturing a dry electrode, a dry electrode, and a lithium battery.

### 2. Description of the Related Art

In light of the increased market demand for electronic devices having reduced sizes and higher performances, it has become important and/or desired for lithium batteries to have higher energy density as well as smaller size (e.g., miniaturization) and lighter weight (e.g., weight reduction). For example, lithium batteries having high capacity have become increasingly important and/or desired.

Because the manufacture of electrodes from a slurry containing a solvent uses an excessive quantity of solvent, dry methods excluding (e.g., not including) such organic solvents are being investigated and/or desired.

### SUMMARY

Aspects of one or more embodiments of the present disclosure include a method of preparing a dry electrode by intermittently coating an electrode active material layer on an electrode current collector.

Aspects of one or more embodiments of the present disclosure include a device for manufacturing a dry electrode by intermittently coating an electrode active material layer on an electrode current collector.

Aspects of one or more embodiments of the present disclosure include a dry electrode prepared by the method.

Aspects of one or more embodiments of the present disclosure include a lithium battery including the dry electrode.

Additional aspects will be set forth in part in the description which follows and, in part, will be apparent from the description, or may be learned by practice of the presented embodiments of the present disclosure.

According to one or more embodiments, a method of preparing a dry electrode includes: supplying (e.g., providing) a metal layer at a first speed, supplying (e.g., providing) a dry electrode film at a second speed while intermittently supplying (e.g., providing) the dry electrode film at a third speed less than the second speed, and forming a dry electrode active material layer by intermittently applying (e.g., disposing) the dry electrode film onto at least one side (e.g., one side or both opposite sides) of the metal layer, wherein the dry electrode film is applied (e.g., disposed) on (onto) the metal layer while the dry electrode film is being supplied (e.g., provided) at the second speed, and the dry electrode film is undisposed (e.g., not disposed and/or not placed or applied) on (onto) the metal layer while the dry electrode film is being supplied (e.g., provided) at the third speed.

According to one or more embodiments, a device for manufacturing a dry electrode includes a first laminator roll and a second laminator roll, spaced (e.g., separated, spaced apart and/or apart) from each other, wherein at least one of the first laminator roll and/or the second laminator roll has a second rotational peripheral speed and is configured or operated to intermittently have a third rotational peripheral speed that is less than the second rotational peripheral speed, and the first laminator roll and the second laminator roll have opposite rotational directions from each other.

According to one or more embodiments, a dry electrode prepared by the method is provided.

According to one or more embodiments, a lithium battery including the dry electrode is provided.

According to one or more embodiments, a system of preparing a dry electrode includes: means for supplying a metal layer at a first speed; means for supplying a dry electrode film at a second speed, while intermittently supplying the dry electrode film at a third speed less than the second speed; and means for forming a dry electrode active material layer by intermittently disposing the dry electrode film on at least one side of the metal layer, wherein the dry electrode film is on the metal layer while the dry electrode film is being supplied at the second speed, and the dry electrode film is not on the metal layer while the dry electrode film is being supplied at the third speed.

At least some of the above and other features of the invention are set out in the claims.

### BRIEF DESCRIPTION OF THE DRAWINGS

The above and other aspects, features, and/or principles of certain embodiments of the present disclosure will be more apparent from the following description taken in conjunction with the accompanying drawings, in which:
FIGs. 1A - 1D are schematic side views showing a method of preparing a dry electrode utilizing a dry electrode film according to Example 1;
FIG. 1E is a plan view of an aluminium thin film utilized in Example 1;
FIG. 1F is a plan view of a dry electrode prepared in Example 1;
FIG. 2 is a schematic diagram showing a method of preparing a dry electrode utilizing dry powder according to Comparative Example 2;
FIG. 3 is a schematic diagram of a lithium battery according to one or more embodiments of the present disclosure;
FIG. 4 is a schematic diagram of a lithium battery according to one or more embodiments of the present disclosure; and
FIG. 5 is a schematic diagram of a lithium battery according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one selected from among a, b, and c," "one from among a, b, and c", "at least one of a to c" indicates only a, only b, only c, both a and b, both a and c, both b and c, all of a, b, and c, or variations thereof.

The present disclosure, which will be more fully described hereinafter, may have one or more suitable variations and various embodiments, and specific embodiments will be illustrated in the accompanied drawings and described in greater detail. However, the present disclosure should not be construed as being limited to specific embodiments set forth herein. Rather, these embodiments are to be understood as encompassing all variations, equivalents, or alternatives included in the scope of the present disclosure.

The terminology used hereinbelow is used for the purpose of describing particular embodiments only and is not intended to limit the present disclosure. As used herein, the singular forms "a," "an" and "the" are intended to include the plural forms as well, unless the context clearly indicates otherwise. It will be further understood that the terms "comprises," "comprising," "includes," and/or "including" specify the presence of the stated features, regions, integers, steps, operations, elements, components, ingredients, materials, or combinations thereof, but do not preclude the presence or addition of one or more other features, regions, integers, steps, operations, elements, components, ingredients, materials, or combinations thereof.

As used herein, "/" may be interpreted as "and," or as "or" depending on the context.

In the drawings, the thicknesses of layers and regions may be exaggerated for clarity of description.

It will be understood that when an element or layer is referred to as being "on," "connected to," "coupled to," or "above" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

It will be understood that although the terms "first," "second," etc. may be used herein to describe various elements, these elements should not be limited by these terms. These terms are only used to distinguish one element from another element. Thus, a first element described below could be termed a second element without departing from the spirit and scope of the present disclosure. In the present specification and the drawings, elements that serve substantially the same function are labeled with the same reference numeral and associated descriptions may not be repeated.

As used herein, the term "dry" or "dry method" refers to a state deliberately not in contact with solvents, *e.g.,* processing solvents, or a state deliberately devoid of solvents (*e.g*., a state where solvents are not added or not deliberately added). For example, the term "dry conductive material" refers to a conductive material deliberately not in contact with solvents, or a conductive material deliberately devoid of any solvents. For example, the term "dry binder" refers to a binder deliberately not in contact with solvents, or a binder deliberately devoid of any solvents (e.g., a binder in which solvents are not added or not deliberately added). For example, a binder that does not mix with solvent and is liquid at room temperature may be referred to as dry binder. For example, the term "dry electrode film" refers to an electrode film deliberately not in contact with solvents, or an electrode film deliberately devoid of any solvents (*e.g*., an electrode film in which solvents are not added or not deliberately added). For example, the term "dry electrode" refers to an electrode deliberately not in contact with solvents, or an electrode deliberately devoid of any solvents (*e.g*., an electrode in which solvents are not added or not deliberately added). For example, the term "dry electrode active material layer" refers to an electrode active material layer deliberately not in contact with solvents, or an electrode active material layer deliberately devoid of any solvents (*e.g*., an electrode active material layer in which solvents are not added or not deliberately added). Also, in present disclosure, "not including a or any 'component'" "excluding a or any 'component'", "'component'-free", and/or the like refers to that the "component" not being added, selected or utilized as a component in the composition or process, but the "component" of less than a suitable amount may still be included due to other impurities and/or external factors.

As used herein, the term "size" or "particle diameter" of a particle refers to an average diameter if the particle is spherical, and refers to an average major axis length if the particle is non-spherical. The particle diameter of particles may be measured utilizing a particle size analyzer (PSA). The term "particle diameter" of particles may refer to an average diameter of the particles, for example. The average particle diameter may be, for example, a median particle diameter (D50). The median particle diameter (D50) refers to the average diameter (or size) of particles whose cumulative volume corresponds to 50 vol% in the particle size distribution (*e.g*., cumulative distribution), and refers to the value of the particle size corresponding to 50% from the smallest particle when the total number of particles is 100% in the distribution curve accumulated in the order of the smallest particle size to the largest particle size measured by a laser diffraction method.

As utilized herein, the terms "fibrillized" and "fibrillize" refer to a process of converting (*e.g*., by grinding or pulverizing) particulates of a substance into fibrous shape (*i.e*., fibrils) of said substance that has higher aspect ratio than the particulates.

As used herein, the term "metal" refers to both metals and metalloids such as silicon and germanium, in an elemental or ionic state.

As used herein, the term "alloy" refers to a mixture of two or more metals.

As used herein, the term "cathode active material" refers to an electrode material capable of undergoing lithiation and delithiation.

As used herein, the term "anode active material" refers to an anode material capable of undergoing lithiation and delithiation.

As used herein, the term "lithiation" or "to lithiate" refers to a process of adding lithium to a cathode active material or an anode active material.

As used herein, the term "delithiation" or "to delithiate" refers to a process of removing lithium from a cathode active material or an anode active material.

As used herein, the term "charging" or "to charge" refers to a process of providing electrochemical energy to a battery.

As used herein, the term "discharging" or "to discharge" refers to a process of removing electrochemical energy from a battery.

As used herein, the terms "positive electrode" and "cathode" refer to an electrode at which electrochemical reduction and lithiation take place during a discharging process.

As used herein, the terms "negative electrode" and "anode" refer to an electrode at which electrochemical oxidation and delithiation take place during a discharging process.

Hereinbelow, a method of preparing a dry electrode according to one or more embodiments will be described in greater detail.

A method of preparing a dry electrode according to one or more embodiments of the present disclosure includes: providing a metal layer at a first speed; providing a dry electrode film at a second speed while providing the dry electrode film intermittently at a third speed less than the second speed; and forming a dry electrode active material layer by intermittently applying (*e.g*., disposing) the dry electrode film onto at least one side (*e.g*., one side or both opposite sides) of the metal layer, wherein the dry electrode film is disposed onto the metal layer while the dry electrode film is being provided at the second speed, and the dry electrode film is undisposed (*e.g*., not disposed and/or not placed) onto the metal layer while the dry electrode film is being provided at the third speed.

While supplying a dry electrode film onto at least one side (*e.g*., one side or both opposite sides) of a metal layer at substantially the same speed as the speed of supplying the metal layer, by intermittently reducing the speed of supplying the dry electrode film to a supplying speed slower than the speed of supplying the metal layer, a dry electrode active material layer may be discontinuously or intermittently applying (*e.g*., disposed) onto at least one side (*e.g*., one side or both opposite sides) of the metal layer 200. As a result, a dry electrode including a plurality of dry electrode active material layers spaced (*e.g*., separated, spaced apart and/or apart) from each other and an uncoated portion disposed between the plurality of dry electrode active material layers may be easily manufactured. By controlling the speed at which the dry electrode film is supplied, the length of the dry electrode active material layer disposed on the metal layer and/or the distance between adjacent dry electrode active material layers may be easily controlled or selected. In one or more embodiments, a dry electrode active material layer in one or more suitable patterns may be introduced onto the metal layer.

A dry electrode manufacturing method of the related art involves applying (*e.g*., disposing) a dry electrode film onto at least one side (e.g., one side or both opposite sides) of an electrode current collector, and then removing part of the dry electrode film to thereby introduce uncoated portions revealing the electrode current collector between a plurality of dry electrode active material layers. Including this additional step of removing the dry electrode film complicates the dry electrode manufacturing process. Furthermore, in such a dry electrode prepared by removing part of the dry electrode film by laser, for example, defects such as burrs and/or recesses may be introduced between the dry electrode active material layer and the current collector. A lithium battery provided with a dry electrode including such defects may exhibit deteriorated cycling performance due to increased side reactions from these defects during charging and discharging.

Hereinbelow, a method of preparing a dry electrode according to embodiments will be described in greater detail.

A method of preparing a dry electrode 400 may include: supplying (e.g., providing) a metal layer 200 at a first speed V1; supplying (e.g., providing) a dry electrode film 100, 100a, 100b at a second speed V2 while supplying (e.g., providing) the dry electrode film 100, 100a, 100b intermittently at a third speed V3 that is less than the second speed V2; and applying (e.g., disposing) the dry electrode film 100, 100a, 100b onto at least one side (e.g., one side or both opposite sides) of the metal layer 200, to thereby form a dry electrode active material layer 300, 300a, 300b. While the dry electrode film 100, 100a, 100b is provided at the second speed V2, the dry electrode film 100, 100a, 100b is disposed on the metal layer 200. In one or more embodiments, while the dry electrode film 100, 100a, 100b is supplied (e.g., provided) at the third speed V3, the dry electrode film 100, 100a, 100b is undisposed (e.g., not disposed and/or not placed) on the metal layer 200.

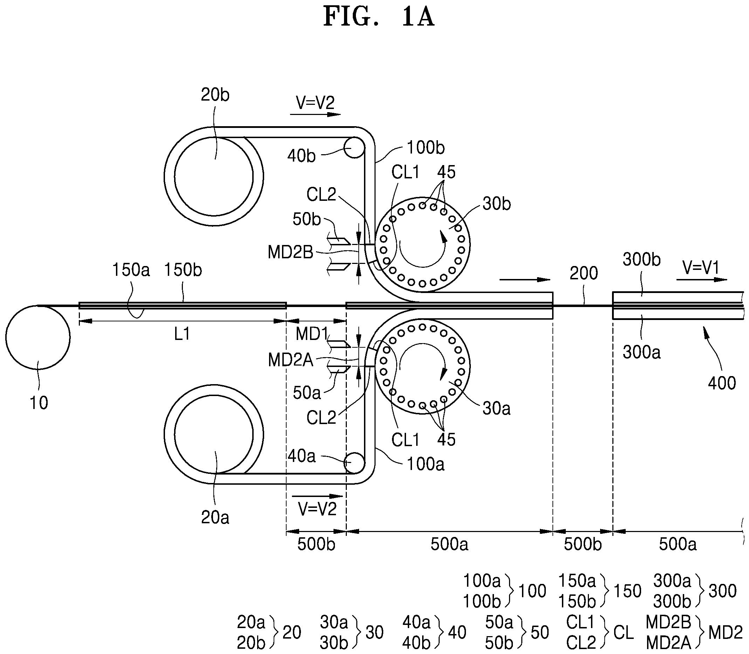

Referring to FIGs. 1A to 1D, first, the metal layer 200 may be provided at the first speed V1.

In one or more embodiments, the metal layer 200 may be first wound on a first winding roll 10 and then from the first winding roll 10, provided continuously at the first speed V1.

In one or more embodiments, the metal layer 200 may be provided at a constant speed. The speed at which the metal layer 200 is provided may be, for example, the manufacturing rate of the dry electrode 400. The speed at which the metal layer 200 is provided may be controlled or selected according to a desired or suitable manufacturing rate of the dry electrode 400. In one or more embodiments, the metal layer 200 may be an electrode current collector.

Further, while the dry electrode film 100, 100a, 100b is provided at the second speed V2, the dry electrode film 100, 100a, 100b may be intermittently provided at the third speed V3 that is less than the second speed V2.

In one or more embodiments, the dry electrode film 100, 100a, 100b may be wound on a 2-1 winding roll 20a, and then provided at the second speed V2 from the 2-1 winding roll 20a. While the dry electrode film 100, 100a, 100b is provided at the second speed V2, the dry electrode film 100, 100a, 100b may be intermittently provided at the third speed V3 that is slower than the second speed V2. In one or more embodiments, the dry electrode film 100, 100a, 100b may be provided from the 2-1 winding roll 20a, at a rate alternating between the second speed V2 and the third speed V3. In one or more embodiments, one cycle may include the dry electrode film 100, 100a, 100b being first provided at the second speed V2, and then more slowly at the third speed V3, and then back at the second speed V2. This cycle may be repeated multiple times. Consequently, the speed at which the dry electrode film 100, 100a, 100b is provided may alternate between the second speed V2 and the third speed V3. The first speed V1 at which the metal layer 200 is provided may be, for example, the speed at which the dry electrode 400 is provided. The first speed V1 at which the metal layer 200 is provided is not particularly limited and may be altered according to a required condition. In one or more embodiments, the first speed V1 may be about 0.001 m/s to about 10 m/s, about 0.01 m/s to about 10 m/s, about 0.1 m/s to about 10 m/s, or about 0.1 m/s to about 1 m/s.

In one or more embodiments, the first speed V1 at which the metal layer 200 is provided may be the same as the second speed V2 at which the dry electrode film 100, 100a, 100b is provided. In one or more embodiments, the second speed V2 may be about 95 % to about 105 %, about 97 % to about 103 %, about 99 % to about 101 %, or about 100 %, relative to the first speed V1. The first speed V1 and the second speed V2 may be adjusted within a range that does not adversely affect the physical properties of a lithium battery that includes the dry electrode film 100, 100a, 100b.

The third speed V3 at which the dry electrode film 100, 100a, 100b is provided may be 0 % to less than 100 %, about 10 % to less than 100%, about 10 % to about 90 %, about 10 % to about 80 %, about 20 % to about 80 %, about 20 % to about 70 %, or about 30 % to about 70 %, relative to the second speed V2. Because the dry electrode film 100, 100a, 100b is provided on the metal layer 200 at the third speed V3 within the above range, an uncoated portion on which the dry electrode film 100, 100a, 100b is undisposed (*e.g.*, not disposed and/or not placed) may be intermittently provided on the metal layer 200 in an efficient manner. Consequently, as the defect formation rate during the manufacturing process of a lithium battery decreases due to the dry electrode 400 having the above structure, cycling performance of the lithium battery provided with such a dry electrode may further improve.

If (*e.g*., when) the third speed V3 is too close to the second speed V2, the supply speed of the dry electrode film 100, 100a, 100b may not be varied enough that introducing of uncoated portions may be difficult, and introducing one or more suitable patterns may also be difficult. If (*e.g*., when) the third speed V3 is too small compared to the second speed V2, an interval between the dry electrode films 100, 100a, 100b may become too wide that utility of the metal layer 200 may become too low.

Further, by controlling the speed V3, uncoated portions with one or more suitable intervals therebetween may be easily introduced intermittently between the dry electrode films 100, 100a, 100b in a substantially continuous process. Therefore, as it becomes possible to continuously manufacture electrodes having one or more suitable patterns in a single electrode manufacturing process, efficiency of electrode manufacturing may improve.

Next, by intermittently applying (*e.g*., disposing) the dry electrode film 100, 100a, 100b on at least one side (*e.g*., one side or both opposite sides) of the metal layer 200, the dry electrode active material layer 300, 300a, 300b may be formed.

In one or more embodiments, the dry electrode film 100, 100a, 100b may be disposed on the metal layer 200 while the dry electrode film 100, 100a, 100b is provided at the second speed V2.

If (*e.g*., when) the first speed V1 at which the metal layer 200 is provided and the second speed V2 at which the dry electrode film 100, 100a, 100b is provided are the same rate, for example, the first speed V1, the dry electrode active material layer 300, 300a, 300b may be formed as the dry electrode film 100, 100a, 100b is disposed on the metal layer 200.

In one or more embodiments, the metal layer 200 supplied at the first speed V1 from the first winding roll 10 may be passed between a pair of the first laminator roll 30a and the second laminator roll 30b, which are spaced (*e.g*., separated, spaced apart and/or apart) from each other at a substantially uniform interval. Further, after the dry electrode film 100, 100a, 100b being supplied at the second speed V2 from the 2-1 winding roll 20a is supplied to the first laminator roll 30a, the dry electrode film 100, 100a, 100b may be disposed on one side of the metal layer 200 by the first laminator roll 30a to thereby form the dry electrode active material layer 300a.

The dry electrode film 100, 100a, 100b may be intermittently undisposed (e.g., not disposed and/or not placed) on the metal layer 200 while the dry electrode film 100, 100a, 100b is being provided at the third speed V3.

As the metal layer 200 is provided at the first speed V1 and the dry electrode film 100, 100a, 100b is provided, for example, at the third speed V3, which is lower than the second speed V2, the dry electrode film 100, 100a, 100b may not be disposed on the metal layer 200. In one or more embodiments, the first speed V1 at which the metal layer 200 is provided may be a higher rate than the second speed V2 at which the dry electrode film 100, 100a, 100b is provided.

If (*e.g*., when) the supplying rate of the dry electrode film 100, 100a, 100b decreases from the second speed V2 down to the third speed V3, for a given time interval, the travel distance of the dry electrode film 100, 100a, 100b being supplied from the first laminator roll 30a onto the metal layer 200 becomes less than the travel distance of the metal layer 200 between the pair of the first laminator roll 30a and the second laminator roll 30b. Due to such a difference in travel distance, an uncoated portion free of the dry electrode film 100, 100a, 100b may be formed on the metal layer 200.

In one or more embodiments, the metal layer 200 being supplied at the first speed V1 from the first winding roll 10 may be passed between a pair of the first laminator roll 30a and the second laminator roll 30b, and the dry electrode film 100a being supplied at the second speed V2 from the 2-1 winding roll 20a may be supplied to the first laminator roll 30a. Subsequently, the dry electrode film 100a may be disposed on one side of the metal layer 200 by the first laminator roll 30a to thereby form the dry electrode active material layer 300a. Subsequently, by decreasing the rotation speed of the first laminator roll 30a, thereby decreasing the supplying rate of the dry electrode film 100, 100a, 100b to the third speed V3, an area not provided with the dry electrode film 100a, e.g., uncoated portion may be created on the metal layer 200. For example, because reducing the third speed V3 to 0 stops the supply of the dry electrode film 100a onto the metal layer 200 passing between the first laminator roll 30a and the second laminator roll 30b, uncoated portions free of the dry electrode active material layer 300a disposed on the metal layer 200 may be formed while the supply of the dry electrode film 100a is stopped.

By subsequently increasing the supplying rate of the dry electrode film 100, 100a, 100b back to the second speed V2, the dry electrode film 100, 100a, 100b may be disposed on the metal layer 200 while the dry electrode film 100, 100a, 100b is being provided at the second speed V2, which is the same rate as the supplying speed of the metal layer 200.

If (*e.g*., when) the supplying speed of the dry electrode film 100, 100a, 100b is increased from the third speed V3 to the second speed V2 after the supplying of the dry electrode film 100, 100a, 100b at the third speed V3, the dry electrode film 100, 100a, 100b is provided at the first speed V1, which is the same rate as the metal layer 200. Accordingly, the dry electrode film 100, 100a, 100b may be disposed onto the metal layer 200 being supplied at the same first speed V1, thereby forming the dry electrode active material layer.

By supplying the dry electrode film 100, 100a, 100b intermittently at the third speed V3 whilst supplying the dry electrode film 100, 100a, 100b at the second speed V2, there may be formed uncoated portions where the metal layer 200 is intermittently exposed between the dry electrode active material layer 300, 300a, 300b disposed on the metal layer 200.

By supplying the dry electrode film 100, 100a, 100b at a rate alternating between the second speed V2 and the third speed V3, a plurality of dry electrode active material layers spaced (*e.g*., separated, spaced apart and/or apart) from each other may be created on the metal layer 200.

The interval between dry electrode active material layers spaced (*e.g*., separated, spaced apart and/or apart) from each other may be controlled or selected by controlling the third speed V3. As a result, dry electrode active material layers having a variety of patterns may be introduced onto the metal layer 200.

Referring to FIGs. 1A to 1D, the dry electrode film 100, 100a, 100b may be a self-standing film, for example. For example, the dry electrode film 100, 100a, 100b may be able to retain a film form without a support. By utilizing a self-standing film type or kind dry electrode film 100, 100a, 100b, the dry electrode film 100, 100a, 100b may be provided from one or more suitable directions, by one or more suitable methods. Because the dry electrode film 100, 100a, 100b is a self-standing film, the dry electrode film 100, 100a, 100b may be provided without any support. In one or more embodiments, the dry electrode film 100, 100a, 100b may be connected without any support between the 2-1 winding roll 20a and a guide roll 40a. Because the dry electrode film 100, 100a, 100b is a self-standing film, the distance between the 2-1 winding roll 20a on which the dry electrode film 100, 100a, 100b is wound and the point where the dry electrode film 100, 100a, 100b contacts the metal layer 200 may be freely or suitably selected.

Referring to FIGs. 1A to 1C, the dry electrode film 100, 100a, 100b may further include, for example, one or more cutting lines CL, CL1, CL2 introduced along a direction perpendicular to a length direction of the dry electrode film 100, 100a, 100b (*e.g*., axial direction). Due to the cutting lines CL, CL1, CL2 introduced into the dry electrode film 100, 100a, 100b, cutting of the dry electrode film 100, 100a, 100b in a section in which the speed of the dry electrode film 100, 100a, 100b is decreased may be easily carried out. There may be a single cutting line CL, CL1, CL2, or a plurality of cutting lines CL, CL1, CL2. For example, there may be one cutting line CL, CL1, CL2. For example, there may be two cutting lines CL, CL1, CL2. The distance between the two cutting lines CL, CL1, CL2 may be a distance corresponding to the interval between two adjacent dry electrode active material layers among the dry electrode active material layers 300, 300a, 300b. For example, the distance between two adjacent cutting lines CL, CL1, CL2 may be about 0.1 µm to about 10 cm, about 1 µm to about 5 cm, about 10 µm to about 1 cm, or about 100 µm to about 1 cm.

For example, the dry electrode film 100, 100a, 100b including the cutting line CL, CL1, CL2 may be supported by a support prior to being disposed on the metal layer 200. The support may be a laminator roll 30, 30a, 30b for example, but the present disclosure is not limited thereto and may be any suitable support capable of supporting the dry electrode film 100, 100a, 100b. The cutting line CL, CL1, CL2 may be introduced into the dry electrode film 100, 100a, 100b by cutting the dry electrode film 100, 100a, 100b in a direction perpendicular (*i.e*., a transverse direction) to the length direction of the dry electrode film 100, 100a, 100b, for example, by a knife 50, 50a, 50b while the dry electrode film 100, 100a, 100b is supported by a support. The length of the cutting line CL, CL1, CL2 in a transverse direction thereof may be the same as the length of the dry electrode film 100, 100a, 100b in a width direction thereof. The dry electrode film 100 may be in a state in which adjacent dry electrode films 100, 100a, 100b are separated from each other on the support by the cutting line CL, CL1, CL2.

Referring to FIGs. 1A to 1E, the metal layer 200 may further include, for example, an interlayer 150, 150a, 150b applied (*e.g*., disposed) on at least one side (*e.g*., one side or both opposite sides) of the metal layer. The providing the metal layer 200 at the first speed V1 may further include disposing the interlayer 150, 150a, 150b on the metal layer 200.

For example, disposing the interlayer 150, 150a, 150b on the metal layer 200 may be further included prior to the providing the metal layer 200 at the first speed V1 or during the providing the metal layer 200 at the first speed V1. By further disposing the interlayer 150, 150a, 150b onto the metal layer 200, the position in which the dry electrode film 100, 100a, 100b is disposed on the metal layer 200 may be more easily controlled or selected. The method by which the interlayer 150, 150a, 150b is disposed onto the metal layer 200 is not particularly limited. For example, the interlayer 150, 150a, 150b may be disposed by a dry method, a wet method, and/or the like. The interlayer 150, 150a, 150b may be intermittently disposed on the metal layer 200. For example, the interlayer 150, 150a, 150b may be disposed intermittently along a length direction of the metal layer 200. For example, the interlayer 150, 150a, 150b may be disposed and (portions of the interlayer 150, 150a, 150b may be) spaced (*e.g*., separated, spaced apart and/or apart) at a substantially uniform interval along the length direction of the metal layer 200.

For example, the interlayer 150, 150a, 150b may be applied (*e.g*., disposed) directly on at least one side (*e.g*., one side or both opposite sides) of the metal layer 200. In one or more embodiments, there may be no other layers between the metal layer 200 and the interlayer 150, 150a, 150b. Application (*e.g*., disposition) of the interlayer 150, 150a, 150b directly on at least one side (*e.g*., one side or both opposite sides) of the metal layer 200 may further improve adhesion between the metal layer 200 and the dry electrode film 100, 100a, 100b, or between the metal layer 200 and the dry electrode active material layer 300, 300a, 300b.

For example, the metal layer 200 may include a plurality of first regions 500a spaced (*e.g*., separated, spaced apart and/or apart) from each other in a length direction of the metal layer 200, and one or more second regions 500b intermittently disposed between the plurality of first regions 500a. Among the first region(s) 500a and the second region(s) 500b of the metal layer 200, the interlayer 150, 150a, 150b may be selectively disposed in the first region(s) 500a. The interlayer 150, 150a, 150b may be undisposed (*e.g*., not disposed and/or not placed) in the second region(s) 500b of the metal layer 200. The second region(s) 500b are uncoated portions revealing the metal layer 200 because the interlayer 150, 150a, 150b is not disposed on the second region 500b. Because the interlayer 150, 150a, 150b is selectively disposed only in the first region(s) 500a of the metal layer 200, the dry electrode film 100, 100a, 100b may be selectively disposed on the metal layer 200 in a more convenient manner.

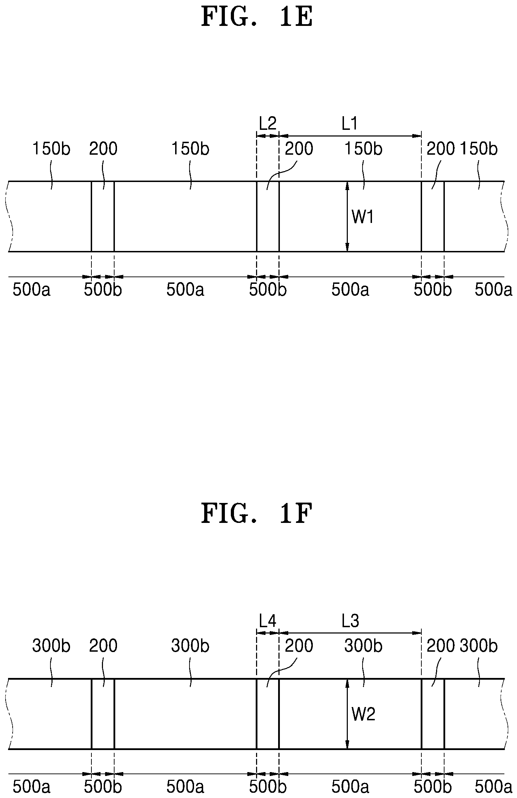

Referring to FIG. 1E, the area of the first region(s) 500a may be 99.99 % or less, 99.9 % or less, 99 % or less, 95 % or less, 90 % or less, or 80 % or less, relative to the total area of the metal layer 200. The area of the first region(s) 500a may be about 10 % to about 99.99 %, about 30 % to about 99.9 %, about 50 % to about 99 %, about 50 % to about 95 %, about 50 % to about 90 %, or about 50 % to about 80 %, relative to the total area of the metal layer 200. With the first region(s) 500a having an area in the above ranges, energy density of the dry electrode may improve.

In one or more embodiments, the first regions 500a may be spaced (*e.g*., separated, spaced apart and/or apart) from each other along the length direction of the dry electrode. Because the first regions 500a are, for example, spaced (*e.g*., separated, spaced apart and/or apart) from each other along the length direction of the metal layer 200, a plurality of electrode plates may be easily manufactured by making a cut between two adjacent first regions 500a.

The first regions 500a may be for example, disposed and spaced (*e.g*., separated, spaced apart and/or apart) at a substantially uniform interval along the length direction of the metal layer 200. Because the first regions 500a are spaced (*e.g*., separated, spaced apart and/or apart) at a substantially uniform interval along the length direction of the metal layer 200, electrode plates having a substantially uniform size may be easily manufactured in a large batch.

In one or more embodiments, the first regions 500a may be, for example, disposed and spaced (*e.g*., separated, spaced apart and/or apart) at a non-substantially uniform interval along the length direction of the metal layer 200. With the first regions 500a being spaced (*e.g*., separated, spaced apart and/or apart) at a non-substantially uniform interval along the length direction of the metal layer 200, a dry electrode having one or more suitable patterns may be prepared.

Referring to FIG. 1E, the ratio L1/L2 of length L1 of each of a plurality of first regions 500a spaced (*e.g*., separated, spaced apart and/or apart) from each other along the length direction of a metal layer 200 to interval L2 between two adjacent first regions 500a may be, for example, about 10 to about 1,000, about 10 to about 500, about 10 to about 200, or about 10 to about 100. As the ratio of the length L1 of each of a plurality of first regions 500a spaced (*e.g*., separated, spaced apart and/or apart) from each other along the length direction of the metal layer 200 to the interval L2 between two adjacent first regions 500a is within the above ranges, the dry electrode thus manufactured may have improved energy density.

The interval L2 between adjacent first regions 500a spaced (*e.g*., separated, spaced apart and/or apart) from each other along the length direction of the metal layer 200 may be less than a width W1 of the metal layer 200.

The ratio L2/W1 of the interval L2 between two adjacent first regions 500a spaced (*e.g*., separated, spaced apart and/or apart) from each other along the length direction of the metal layer 200 to the width W1 of the metal layer 200 may be, for example, about 0.01 to about 0.9, about 0.01 to about 0.8, about 0.01 to about 0.5, about 0.01 to about 0.3, about 0.01 to about 0.2, or about 0.01 to about 0.1.

As the ratio of the interval L2 between two adjacent first regions 500a spaced (*e.g*., separated, spaced apart and/or apart) from each other along the length direction of the metal layer 200 to the width W1 of the metal layer 200 is within the above ranges, the dry electrode thus manufactured may have improved energy density.

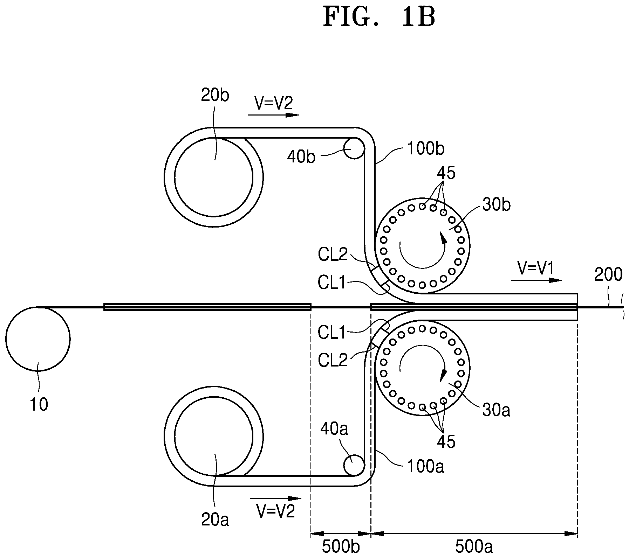

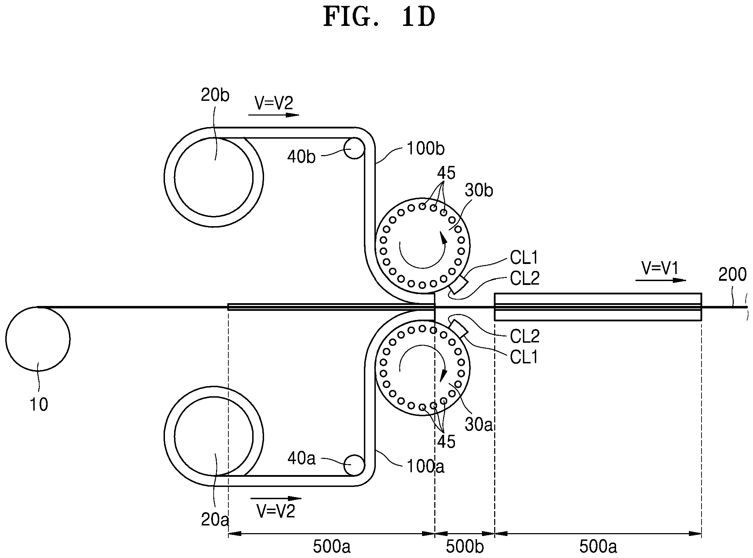

Referring to FIG. 1A, FIG. 1B, and FIG. 1D, while the metal layer 200 is provided at a first speed V1 and the dry electrode film 100, 100a, 100b is provided at a second speed V2 that is the same as the first speed V1, the dry electrode film 100, 100a, 100b may be disposed on the interlayer 150, 150a, 150b of the first region(s) 500a.

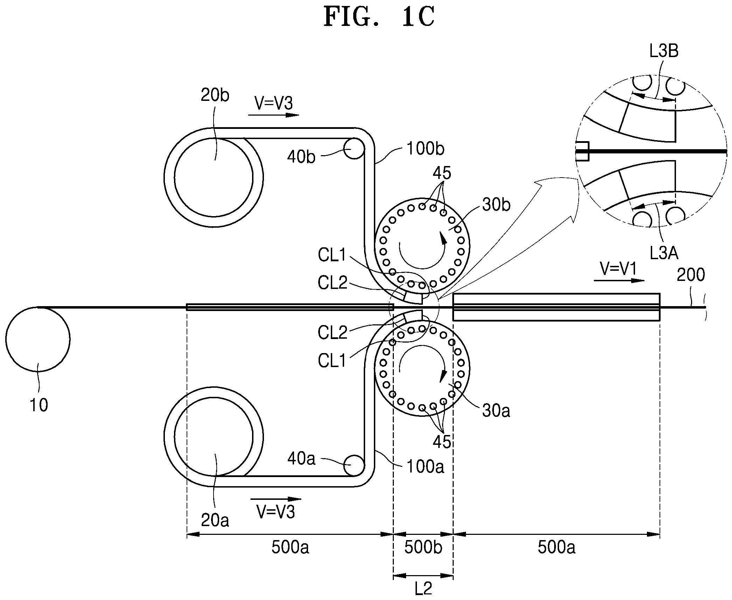

Referring to FIG. 1C, while the metal layer 200 is provided at a first speed V1 and the dry electrode film 100, 100a, 100b is provided at a third speed V3 that is lower than the first speed V1, the dry electrode film 100, 100a, 100b may be undisposed (*e.g*., not disposed and/or not placed) on the second region 500b of the metal layer 200. In one or more embodiments, while the metal layer 200 is provided at a first speed V1 and the dry electrode film 100, 100a, 100b is provided at a third speed V3 that is lower than the first speed V1, the dry electrode film 100, 100a, 100b (*e.g*., portions of the dry electrode film) may be spaced (*e.g*., separated, spaced apart and/or apart) from a surface of the second region 500b of the metal layer 200. As a result, the dry electrode film 100, 100a, 100b may not be disposed on the second region 500b of the metal layer 200.

Referring to FIG. 1F, the total area of the dry electrode active material layer 300b may be 99.99 % or less, 99.9 % or less, 99 % or less, 95 % or less, 90 % or less, or 80 % or less, relative to the total area of the dry electrode 400 (or relative to the total area of the metal layer 200). The total area of the dry electrode active material layer 300b may be about 10 % to about 99.99 %, about 30 % to about 99.9 %, about 50 % to about 99 %, about 50 % to about 95 %, about 50 % to about 90 %, or about 50 % to about 80 %, relative to the total area of the dry electrode 400 (or relative to the total area of the metal layer 200). For example, the total area of the dry electrode active material layer 300b may be substantially the same as the total area of the first regions 500a. With the dry electrode active material layers having a total area in the above ranges, energy density of the dry electrode may improve.

For example, the dry electrode active material layers 300, 300a, 300b may be spaced (*e.g*., separated, spaced apart and/or apart) from each other along a length direction of the dry electrode. In one or more embodiments, as the dry electrode active material layers 300, 300a, 300b are spaced (*e.g*., separated, spaced apart and/or apart) from each other along the length direction of the dry electrode, a plurality of electrode plates may be easily manufactured by making a cut between dry electrode active material layers adjacent to each other.

For example, the dry electrode active material layers 300, 300a, 300b may be spaced (*e.g*., separated, spaced apart and/or apart) at a substantially uniform interval along a length direction of the dry electrode. Because the dry electrode active material layers are spaced (*e.g*., separated, spaced apart and/or apart) at a substantially uniform interval along the length direction of the dry electrode, electrode plates having a substantially uniform size may be easily manufactured in a large batch.

Referring to FIGs. 1A to 1D, the dry electrode active material layers 300, 300a, 300b may be, for example, evenly spaced (*e.g*., separated, spaced apart and/or apart) at a substantially uniform interval by a first distance MD1 along a length direction of the dry electrode.

Referring to FIGs. 1A to 1C, the dry electrode film 100, 100a, 100b may further include, for example, a plurality of cutting lines CL, CL1, CL2 introduced along a direction perpendicular to a length direction of the dry electrode film 100, 100a, 100b (*e.g*., axial direction). Due to the plurality of cutting lines CL, CL1, CL2 introduced into the dry electrode film 100, 100a, 100b, cutting of the dry electrode film 100, 100a, 100b may be more easily carried out in a section in which the speed of the dry electrode film 100, 100a, 100b is decreased. For example, the plurality of cutting lines CL, CL1, CL2 may include a first cutting line CL1 and a second cutting line CL2, and the first cutting line CL1 and the second cutting line CL2 may be spaced (*e.g*., separated, spaced apart and/or apart) from each other by a second distance MD2, MD2A, MD2B. For example, a distance between the plurality of cutting lines CL, CL1, CL2, that is, the second distance MD2, MD2A, MD2B may be about 0 % to less than 100 %, about 10 % to less than 100%, about 10 % to about 90 %, about 10 % to about 80 %, about 20 % to about 80 %, about 20 % to about 70 %, or about 30 % to about 70 %, relative to the first distance MD1. For example, a second distance MD2, MD2A, MD2B (or L3, L3A, L3B) may be about 0.1 µm to about 10 cm, about 1 µm to about 5 cm, about 10 µm to about 1 cm, or about 100 µm to about 1 cm. As the first distance MD1 decreases, the energy density of the dry electrode may increase. As the second distance MD2, MD2A, MD2B decreases, the portion of the dry electrode film 100, 100a, 100b to be discarded decreases, thereby increasing utilization of the dry electrode film 100, 100a, 100b.

In one or more embodiments, the dry electrode active material layers 300, 300a, 300b may be, for example, disposed and spaced (*e.g*., separated, spaced apart and/or apart) at a non-uniform (*e.g*., substantially non-uniform) interval along the length direction of the dry electrode. As the dry electrode active material layers 300, 300a, 300b is, for example, disposed and spaced (*e.g.*, separated, spaced apart and/or apart) at a non-uniform (*e.g*., substantially non-uniform) interval along the length direction of the dry electrode, the dry electrode having one or more suitable patterns may be manufactured.

Referring to FIG. 1F, the ratio L3/L4 of length L3 of each of the dry electrode active material layers spaced (*e.g*., separated, spaced apart and/or apart) from each other (*e.g*., the other dry electrode active material layers) along the length direction of the dry electrode to interval L4 between two adjacent dry electrode active material layers may be, for example, about 10 to about 1,000, about 10 to about 500, about 10 to about 200, or about 10 to about 100. As the ratio of the length L3 of each of the dry electrode active material layers spaced (*e.g*., separated, spaced apart and/or apart) from each other (*e.g*., the other dry electrode active material layers) along the length direction of the dry electrode to the interval L4 between two adjacent dry electrode active material layers is within the above ranges, energy density of the dry electrode thus manufactured may improve.

An interval L2 (or L4) between adjacent dry electrode active material layers spaced (*e.g*., separated, spaced apart and/or apart) from each other along the length direction of the dry electrode may be less than a width W2 of the dry electrode.

The ratio L2/W2 (or L4/W2) of interval L2 (or L4) between dry electrode active material layers spaced (*e.g*., separated, spaced apart and/or apart) from each other along the length direction of the dry electrode to width W2 of the dry electrode may be, for example, about 0.01 to about 0.9, about 0.01 to about 0.8, about 0.01 to about 0.5, about 0.01 to about 0.3, about 0.01 to about 0.2, or about 0.01 to about 0.1.

As the ratio L2/W2 (or L4/W2) of the interval L2 (or L4) between dry electrode active material layers spaced (*e.g*., separated, spaced apart and/or apart) from each other along the length direction of the dry electrode to the width W2 of the dry electrode is within the above ranges, energy density of the dry electrode thus produced may improve.

Because the dry electrode film 100, 100a, 100b is selectively disposed on the metal layer 200, a separate step of removing the dry electrode film 100, 100a, 100b from the metal layer 200 may not be included (*e.g*., may be excluded).

The dry electrode preparation method in the related art involves disposing the dry electrode film 100, 100a, 100b on the entire metal layer 200, and then selectively removing part of the dry electrode film 100, 100a, 100b. In one or more embodiments of the present disclosure, a method of preparing a dry electrode may omit (*e.*g., may not include) the additional step of removing the dry electrode film 100, 100a, 100b by having the dry electrode film 100, 100a, 100b selectively disposed on the metal layer 200, and thus may simplify the entire process and prevent or reduce additional defects that may occur during the removal of the dry electrode film 100, 100a, 100b.

One surface of the second region 500b disposed adjacent to the first region 500a of the metal layer 200 may be free of burrs or recesses. In one or more embodiments, one surface of the metal layer 200 adjacent to one side of the dry electrode active material layer and uncoated by the dry electrode active material layer may be free of burrs or recesses.

If (*e.g*., when) the dry electrode film 100, 100a, 100b, after being disposed onto the entire metal layer 200, is to be removed from the second region 500b by laser cutting, there may be defects formed from the laser cutting, such as burrs and/or recesses, around the boundary between the first region 500a and the second region 500b of the dry electrode film 100, 100a, 100b disposed in the first region 500a of the metal layer 200. A dry electrode including such defects may deteriorate the cycling performance of a lithium battery including the dry electrode due to the defects during cycling of the lithium battery, for example, due to increased internal resistance and/or increased side reactions caused by delamination of the dry electrode film 100, 100a, 100b from the electrode current collector. In one or more embodiments, the method of preparing a dry electrode can prevent or reduce a lithium battery from degradations due to defects such as burrs and/or irregular features formed from laser cutting, by omitting (*e.g*., not including) the step of removing the dry electrode film 100, 100a, 100b.

The forming of the dry electrode active material layer may include, for example, laminating the dry electrode film 100, 100a, 100b and the metal layer 200. For example, the forming of the dry electrode active material layer may be carried out by lamination of the dry electrode film 100, 100a, 100b and the metal layer 200. The lamination of the dry electrode film 100, 100a, 100b and the metal layer 200 may form a dry electrode active material layer 300, 300a, 300b. For example, the dry electrode active material layer 300, 300a, 300b may be laminated on the metal layer 200 by binding with the interlayer 150, 150a, 150b.

For example, the lamination of the dry electrode film 100, 100a, 100b and the metal layer 200 may be carried out by allowing the dry electrode film 100, 100a, 100b and the metal layer 200 to pass between a pair of rolls.

The pair of rolls may be, for example, a pair of calendar rolls, a pair of guide rolls, a pair of laminator rolls, and/or the like, but the present disclosure is not limited thereto and may include any suitable rolls capable of laminating the dry electrode films 100, 100a, 100b and the metal layer 200.

The pair of rolls may act as one or more of calendar rolls, guide rolls, and/or laminator rolls. For example, the pair of guide rolls may act as both (*e.g*., simultaneously) guide rolls and laminator rolls.

For example, the forming of the dry electrode active material layer may further include applying heat, pressure, or a combination thereof, to one or more of the dry electrode film 100, 100a, 100b and/or the metal layer 200. For example, the forming of the dry electrode active material may involve further applying heat, pressure, or a combination thereof, to one or more of the dry electrode film 100, 100a, 100b and/or the metal layer 200.

For example, the metal layer 200 may be provided from a first winding roll 10, the dry electrode film 100, 100a, 100b may be provided from a second roll, and as the metal layer 200 and the dry electrode film 100, 100a, 100b are passing through a pair of rolls, by heat, pressure, or a combination thereof applied by the pair of rolls, the metal layer 200 and the dry electrode film 100, 100a, 100b may be laminated together, thereby forming a dry electrode active material layer.

For example, the metal layer 200 including the interlayer 150, 150a, 150b selectively disposed in the first region 500a may be provided from the first winding roll 10, the dry electrode film 100, 100a, 100b may be provided from the second roll, and as the metal layer 200 and the dry electrode film 100, 100a, 100b are passing through a pair of rolls, by heat, pressure, or a combination thereof, applied by the pair of rolls, a dry electrode film may be disposed and laminated concurrently (*e.g*., simultaneously) on the interlayer 150, 150a, 150b, thereby forming a dry electrode active material layer.

The range of the heat and pressure utilized in the applying heat, pressure or a combination thereof is not particularly limited and may be selected within a range that enables formation of a dry electrode active material layer without cracks. The temperature of the pair of rolls may be, for example, about 0 °C to about 100 °C, or about 10 °C to about 50 °C. The pressure applied to the dry electrode by the pair of rolls may be, for example, about 0 Pa to about 100 MPa, about 1 Pa to about 10 MPa, or about 1 Pa to about 1 MPa.

The forming of the dry electrode active material layer 300, 300a, 300b may include, for example, concurrently (*e.g*., simultaneously) providing both the dry electrode film 100, 100a, 100b and the metal layer 200 between the first laminator roll 30a and the second laminator roll 30b.

Referring to FIGs. 1A to 1D, the metal layer 200 may be provided from the first winding roll 10, the dry electrode film 100, 100a, 100b may be provided from the 2-1 winding roll 20a and the 2-2 winding roll 20b, and while the metal layer 200 and the dry electrode film 100, 100a, 100b pass between at least one pair of laminator rolls, the metal layer 200 and the dry electrode film 100, 100a, 100b may be laminated together to form the dry electrode active material layer 300, 300a, 300b. For example, a pair of guide rolls 40, 40a, 40b may be further positioned before a pair of laminator rolls 30, 30a, 30b. Before passing between at least one pair of laminator rolls, the metal layer 200 and the dry electrode film 100, 100a, 100b may pass through at least one pair of guide rolls 40, 40a, 40b, and the dry electrode film 100, 100a, 100b may be disposed onto the metal layer 200.

For example, the metal layer 200 may be provided from the first winding roll 10, the dry electrode film 100, 100a, 100b may be provided from the 2-1 winding roll 20a and the 2-2 winding roll 20b, and a dry electrode film may be disposed onto the metal layer 200 while the metal layer 200 and the dry electrode film 100, 100a, 100b pass by the first guide roll 40a and the second guide roll 40b, and the metal layer 200 and the dry electrode film 100, 100a, 100b, while passing between the first laminator roll 30a and the second laminator roll 30b, may be laminated together to form the dry electrode active material layer 300, 300a, 300b.

For example, the metal layer 200 including the interlayer 150, 150a, 150b selectively disposed in the first region 500a may be provided from the first winding roll 10, the dry electrode film 100, 100a, 100b may be provided from the 2-1 winding roll 20a and the 2-2 winding roll 20b, and as the metal layer 200 and the dry electrode film 100, 100a, 100b are passing between the first laminator roll 30a and the second laminator roll 30b, a dry electrode film may be disposed and laminated concurrently (*e.g*., simultaneously) on the interlayer 150, 150a, 150b, thereby forming a dry electrode active material layer 300, 300a, 300b.

At least one of the first laminator roll 30a and/or the second laminator roll 30b may further include, for example, a suction hole 45 for mechanically attaching the dry electrode film 100, 100a, 100b to the at least one of the first laminator roll 30a and/or the second laminator roll 30b.

A plurality of the suction holes 45 may be disposed on the surface of at least one of the first laminator roll 30a and/or the second laminator roll 30b. The plurality of suction holes 45 may serve to attach the dry electrode film 100, 100a, 100b to the surface of the at least one of the first laminator roll 30a and/or the second laminator roll 30b. For example, the suction holes 45 may mechanically attach the dry electrode film 100, 100a, 100b to the surface of the at least one of the first laminator roll 30a and/or the second laminator roll 30b by vacuum. By controlling the intensity of vacuum applied to the suction hole 45, the dry electrode film 100, 100a, 100b may be easily attached to and/or detached from the surface of the at least one of the first laminator roll 30a and/or the second laminator roll 30b. For example, if (*e.g*., when) the pressure of vacuum applied to the suction holes 45 is less than the atmospheric pressure, the dry electrode film 100, 100a, 100b may be easily attached to the surface of the at least one of the first laminator roll 30a and/or the second laminator roll 30b. For example, if (*e.g*., when) the pressure of the vacuum applied to the suction holes 45 is greater than the atmospheric pressure, the dry electrode film 100, 100a, 100b may be easily detached from the surface of the at least one of the first laminator roll 30a and/or the second laminator roll 30b.

Because the dry electrode film 100, 100a, 100b is attached to the surface of at least one of the first laminator roll 30a and/or the second laminator roll 30b, even though the dry electrode film 100, 100a, 100b becomes delaminated as the speed of the dry electrode film 100, 100a, 100b is reduced from the second speed V2 to the third speed V3, one end of the delaminated dry electrode film 100 remains attached to the metal layer 200, while the other end thereof remains attached to the surface of at least one of the first laminator roll 30a and/or the second laminator roll 30b, which allows the process of manufacturing dry electrodes to be carried out continuously.

For example, the dry electrode film 100, 100a, 100b may include at least one cutting line formed along a machine direction, while the dry electrode film 100, 100a, 100b is attached to at least one of the first laminator roll 30a and/or the second laminator roll 30b. Because the dry electrode film 100, 100a, 100b further includes the cutting line, the dry electrode film 100, 100a, 100b may be more easily delaminated during the process of decreasing the speed of the dry electrode film 100, 100a, 100b from the second speed V2 to the third speed V3.

Rolls utilized in the manufacture of the dry electrode may not include (*e.g*., may exclude) an opening having a length. Guide rolls, laminator rolls, calendar rolls, and/or the like utilized in the manufacture of the dry electrode may not include (*e.g*., may exclude) an opening having a length. The length of the opening may be a length disposed along a width direction of the dry electrode. At least one of the first laminator roll 30a and/or the second laminator roll 30b may not include (*e.g*., may exclude), for example, an opening having a length formed along a transverse direction (TD). Because the rolls utilized in the manufacturing of the dry electrode are free of openings, a substantially uniform pressure may be applied to the dry electrode active material layers when forming the dry electrode active material layers.

For example, a dry electrode 400 illustrated in FIG. 1F may be prepared utilizing a metal layer 200 illustrated in FIG. 1E, by the method as follows.

Referring to FIG. 1A, while the first region 500a of the metal layer 200 is passed between the first laminator roll 30a and the second laminator roll 30b at a first speed V1, a dry cathode film 100a may be supplied from the first laminator roll 30a onto a carbon layer 150a of the first region 500a of the metal layer 200 at a second speed V2, which has the same speed as the first speed V1, to thereby laminate the dry cathode film 100a onto one side of the metal layer 200 and dispose a dry electrode active material layer 300a onto the one side of the metal layer 200. Before the second region 500b adjacent to the first region 500a of the metal layer 200 is supplied between the first laminator roll 30a and the second laminator roll 30b, while the dry cathode film 100a, which corresponds to a machine direction length MD1 of the second region 500b of the metal layer 200, is attached to the surface of the first laminator roll 30a, a first cutting line CL1 and a second cutting line CL2 may be concurrently (*e.g*., simultaneously) introduced into the dry cathode film 100a by a pair of knives 50, 50a, 50b, which are spaced (*e.g*., separated, spaced apart and/or apart) from each other by a length MD2A that corresponds to 50% of the MD1 of the second region 500b.

Referring to FIG. 1B, compared to FIG. 1A, the second region 500b adjacent to the first region 500a are moved closer to between the first laminator roll 30a and the second laminator roll 30b. The first cutting line CL1 of the dry cathode film 100a may be controlled or selected so as to coincide with the boundary between the first region 500a and the second region 500b.

Referring to FIG. 1C, from the point at which the second region 500b of the metal layer 200 is introduced between the first laminator roll 30a and the second laminator roll 30b and until the second region 500b of the metal layer 200 is passed between the first laminator roll 30a and the second laminator roll 30b by a machine direction length MD2 by reducing the speed of supplying a dry cathode film 100a from the first laminator roll 30a to a third speed V3 less than a second speed V2, the dry cathode film 100a is passed through by a length MD2A less than the machine direction length MD2 of the second region 500b. Further, while the second region 500b of the metal layer 200 is passing between the first laminator roll 30a and the second laminator roll 30b, the dry cathode active material layer 300a is not laminated on the second region 500b of the metal layer 200.

Referring to FIG. 1D, from the point at which the first region 500a adjacent to the second region 500b of the metal layer 200 is introduced between the first laminator roll 30a and the second laminator roll 30b, the speed of supplying the dry cathode film 100a from the first laminator roll 30a onto the carbon layer 150a of the first region 500a of the metal layer 200 is increased to a second speed V2 greater than a third speed V3, to thereby laminate the dry cathode film 100a on one side of the metal layer 200 and dispose the dry cathode active material layer 300a onto the one side of the metal layer 200. The dry cathode film 100a disposed between the first cutting line CL1 and the second cutting line CL2, after passing between the first laminator roll 30a and the second laminator roll 30b, may be easily delaminated from the surface of the first laminator roll 30a by blocking a plurality of suction holes 45 disposed on the surface of the first laminator roll 30a (*e.g*., removing the suction at the plurality of suction holes 45) or utilizing a separate delaminator.

Referring to FIGs. 1A to 1D, the same process may be sequentially carried out concurrently (*e.g*., simultaneously) on the other side of the metal layer 200. To coat the other side of the metal layer 200 with the dry cathode film 100b, the rotation speed of the 2-2 winding roll 20b and the second laminator roll 30b may be controlled or selected such that the dry cathode film 100b is supplied at a first speed V1 from the 2-2 winding roll 20b to the second laminator roll 30b. Consequently, the dry electrode film 100 including a plurality of dry electrode active material layers 300, 300a, 300b spaced (*e.g*., separated, spaced apart and/or apart) at a substantially uniform interval may be easily prepared.

A device for manufacturing a dry electrode according to one or more embodiments may include a first laminator roll and a second laminator roll, which are spaced (*e.g*., separated, spaced apart and/or apart) from each other, wherein at least one of the first laminator roll and/or the second laminator roll may have a second rotational peripheral speed and may be configured or operated to intermittently have a third rotational peripheral speed that is less than the second rotational peripheral speed, and the first laminator roll and the second laminator roll may have opposite rotational directions from each other.

Referring to FIGs. 1A to 1D, the device for manufacturing a dry electrode may include a first laminator roll 30a and a second laminator roll 30b, which are spaced (*e.g*., separated, spaced apart and/or apart) from each other. At least one of the first laminator roll 30a and/or the second laminator roll 30b has a second rotational peripheral speed and is configured or operated to intermittently have a third rotational peripheral speed that is less than the second rotational peripheral speed. The first laminator roll 30a and the second laminator roll 30b may have opposite rotational directions from each other. The device for manufacturing a dry electrode, due to having the above configuration, may easily produce a dry electrode in which a dry electrode active material layer in one or more suitable patterns is introduced onto a metal layer.

Referring to FIGs. 1A to 1D, the device for manufacturing a dry electrode may further include a first winding roll 10. For example, the metal layer 200 may be wound on the first winding roll 10.

From the first winding roll 10, the metal layer 200 may be provided between the first laminator roll 30a and the second laminator roll 30b at a first speed V1.

From at least one of the first laminator roll 30a and/or the second laminator roll 30b, the dry electrode film 100, 100a, 100b may be provided onto the metal layer 200 at a second speed V2 and intermittently at a third speed V3 less than the second speed V2.

While the dry electrode film 100, 100a, 100b is provided at the second speed V2, the dry electrode film 100, 100a, 100b may be disposed on the metal layer 200.

While the dry electrode film 100, 100a, 100b is provided at the third speed V3, the dry electrode film 100, 100a, 100b may be undisposed (*e.g*., not disposed and/or not placed) onto the metal layer 200.

Referring to FIGs. 1A to 1D, in the device for manufacturing a dry electrode, the first laminator roll 30a and the second laminator roll 30b may have one or more suitable rotational peripheral speeds VRP to produce a dry electrode 400.

Referring to FIGs. 1A and 1B, in the device for manufacturing a dry electrode, the metal layer 200 may be provided between the first laminator roll 30a and the second laminator roll 30b at a first speed V1 from the first winding roll 10 having a first rotational peripheral speed VRP1. While the first region 500a of the metal layer 200 and the dry electrode film 100, 100a, 100b are concurrently (*e.g*., simultaneously) provided between the first laminator roll 30a and the second laminator roll 30b, the first laminator roll 30a and the second laminator roll 30b may have a second rotational peripheral speed VRP2. While the metal layer 200 is provided at the first speed V1 from the first winding roll 10, and the dry electrode film 100, 100a, 100b is provided at the second speed V2 from the 2-1 winding roll 20a and 2-2 winding roll 20b, the metal layer 200 and the dry electrode film 100, 100a, 100b may pass between the first laminator roll 30a and the second laminator roll 30b having the second rotational peripheral speed VRP2 to laminate the metal layer 200 and the dry electrode film 100, 100a, 100b together, thereby forming the dry electrode active material layer 300, 300a, 300b. The second rotational peripheral speed VRP2 of the first laminator roll 30a and the second laminator roll 30b may be controlled or selected to have the same value as the first speed V1, which is the speed of providing the metal layer 200, and/or the second speed V2, which is the speed of providing the dry electrode film 100, 100a, 100b, at the contact point between the metal layer 200 and/or the dry electrode film 100, 100a, 100b, passing between the first laminator roll 30a and the second laminator roll 30b. The second rotational peripheral speed VRP2 may have, for example, the same value as the first speed V1 and the second speed V2.

Referring to FIG. 1C, in the device for manufacturing a dry electrode, while the second region 500b of the metal layer 200 is provided between the first laminator roll 30a and the second laminator roll 30b, and at least part of the dry electrode film 100, 100a, 100b is not provided between the first laminator roll 30a and the second laminator roll 30b, at least one of the first laminator roll 30a and/or the second laminator roll 30b may slow down to a third rotational peripheral speed VRP3 less than the second rotational peripheral speed VRP2. For example, while the metal layer 200 is provided at the first speed V1 from the first winding roll 10, and the dry electrode film 100a is provided from the 2-1 winding roll 20a and the 2-2 winding roll 20b at a third speed V3 less than the second speed V2, the metal layer 200 may pass through the first laminator roll 30a and the second laminator roll 30b to thereby form an uncoated portion free of the dry electrode active material layer 300a. In one or more embodiments, as the first laminator roll 30a has the third rotational peripheral speed VRP3 less than the second rotational peripheral speed VRP2, the dry electrode film 100a may not be provided onto the metal layer 200. The first laminator roll 30a and the second laminator roll 30b may have, for example, a different rotational peripheral speed VRP from each other. For example, the rotational peripheral speed ratio of the first laminator roll 30a and the second laminator roll 30b may be, for example, about 9:1 to about 1:9, about 7:1 to about 1:7, about 5:1 to about 1:5, or about 5:2 to about 2:5.

In one or more embodiments, the first laminator roll 30a and the second laminator roll 30b may be positioned further apart from the metal layer 200, such that an uncoated portion can be formed on the metal layer 200 without a change in rotational peripheral speeds. In embodiments in which the first laminator roll 30a and the second laminator roll 30b are positioned further apart from the metal layer 200, even if (*e.g*., when) the second region 500b of the metal layer 200 is provided between the first laminator roll 30a and the second laminator roll 30b, and the dry electrode film 100, 100a, 100b is not provided between the first laminator roll 30a and the second laminator roll 30b, the first laminator roll 30a and the second laminator roll 30b may maintain the second rotational peripheral speed VRP2. For example, as the first laminator roll 30a and the second laminator roll 30b are positioned further away from the metal layer 200, the first laminator roll 30a and the second laminator roll 30b, even while maintaining the second rotational peripheral speed VRP2, may not provide the dry electrode film 100, 100a, 100b onto the metal layer 200.

Referring to FIG. 1D, in the device for manufacturing a dry electrode, while the first region 500a of the metal layer 200 and the dry electrode films 100, 100a, 100b are concurrently (*e.g*., simultaneously) provided between the first laminator roll 30a and the second laminator roll 30b, the rotational peripheral speed VRP of the first laminator roll 30a and the second laminator roll 30b may be increased back to the second rotational peripheral speed VRP2 from the third rotational peripheral speed VRP3. Accordingly, while the metal layer 200 is provided at the first speed V1 from the first winding roll 10, and the dry electrode film 100, 100a, 100b is provided at the second speed V2 from the 2-1 winding roll 20a and the 2-2 winding roll 20b, the metal layer 200 and the dry electrode film 100, 100a, 100b may pass between the first laminator roll 30a and the second laminator roll 30b having the second rotational peripheral speed VRP2 to laminate the metal layer 200 and the dry electrode film 100, 100a, 100b together, thereby forming the dry electrode active material layer 300, 300a, 300b.

In the device for manufacturing a dry electrode, the processes illustrated in FIGs. 1A to 1D may be sequentially repeated to produce a dry electrode with the electrode active material layers 300, 300a, 300b spaced (*e.g*., separated, spaced apart and/or apart) from each other on the metal layer 200.

For example, the metal layer 200 to be utilized in the preparation of the dry electrode may be an electrode current collector.

Materials constituting the electrode current collector may be any conductive material that does not react with lithium, that is, does not form an alloy or a compound with lithium. The electrode current collector may be, for example, a metal or an alloy. For example, the electrode current collector may include (e.g., consist of) indium (In), copper (Cu), magnesium (Mg), stainless steel, titanium (Ti), iron (Fe), cobalt (Co), nickel (Ni), zinc (Zn), aluminium (Al), germanium (Ge), lithium (Li), or an alloy thereof.

The electrode current collector may have a form of (e.g., a form selected from among) a sheet, a foil, a film, a plate, a porous structure, a mesoporous structure, a through-hole containing structure, a polygonal ring, a mesh, a foam, and/or a nonwoven structure, but the present disclosure is not limited to the aforementioned examples, and the electrode current collector may have any suitable form available in the art.

The electrode current collector may have a reduced thickness, compared to an electrode current collector included in electrodes in the related art. Accordingly, an electrode according to embodiments, by including a thin-film current collector, may be distinguished from an electrode in the related art that includes a thick-film current collector. As the electrode according to one or more embodiments employs a thin-film current collector having a reduced thickness, the electrode active material layer in the electrode including the thin-film current collector may have an increased thickness. As a result, a lithium battery employing such an electrode may have increased energy density. In one or more embodiments, the electrode current collector may have a thickness of less than 15 µm, 14.5 µm or less, or 14 µm or less. In one or more embodiments, the electrode current collector may have a thickness of about 0.1 µm to less than 15 µm, about 1 µm to about 14.5 µm, about 2 µm to about 14 µm, about 3 µm to about 14 µm, about 5 µm to about 14 µm, or about 10 µm to about 14 µm.

The electrode current collector may have a decreased surface roughness, compared to an electrode current collector included in electrodes in the related art. Because the surface of the electrode current collector has a decreased surface roughness, the electrode current collector may form a substantially uniform interface with the electrode active material layer and/or the interlayer 150, 150a, 150b. Consequently, local side reactions and/or non-uniform (*e.g*., substantially non-uniform) electrode reactions at the interface between the electrode current collectors and other layers may be inhibited or reduced, and the cycling performance of a lithium battery including such an electrode may improve.

The maximum roughness depth (Rₘₐₓ) of the surface of the electrode current collector may be, for example, 3 µm or less, 2 µm or less, 1 µm or less, 0.5 µm or less, or 0.1 µm or less. The maximum roughness (Rₘₐₓ) of the surface of the electrode current collector may be, for example, about 10 nm to about 3 µm, about 10 nm to about 2 µm, about 10 nm to about 1 µm, about 10 nm to about 0.5 µm, or about 10 nm to about 0.1 µm. The maximum roughness depth (Rₘₐₓ) of the surface of the electrode current collector can be measured by using an atomic force microscopy (AFM), scanning electron microscopy (SEM), or transmission electron microscopy (TEM).

The mean roughness (Rₐ) of the surface of the electrode current collector may be, for example, 2 µm or less, 1 µm or less, 0.5 µm or less, or 0.1 µm or less. The mean roughness (Rₐ) of the surface of the electrode current collector may be, for example, about 10 nm to about 2 µm, about 10 nm to about 1 µm, about 10 nm to about 0.5 µm, or about 10 nm to about 0.1 µm. The mean roughness (Rₐ) of the surface of the electrode current collector can be measured by using an atomic force microscopy (AFM), scanning electron microscopy (SEM), or transmission electron microscopy (TEM).

The root mean square (RMS) roughness (R_{q}) of the surface of the electrode current collector may be, for example, 2 µm or less, 1 µm or less, 0.5 µm or less, or 0.1 µm or less. The RMS roughness (R_{q}) of the surface of the electrode current collector may be, for example, about 10 nm to about 2 µm, about 10 nm to about 1 µm, about 10 nm to about 0.5 µm, or about 10 nm to about 0.1 µm. The RMS roughness (R_{q}) of the surface of the electrode current collector can be measured by using an atomic force microscopy (AFM), scanning electron microscopy (SEM), or transmission electron microscopy (TEM).

The electrode current collector may include a base film and a metal thin-film layer applied (*e.g*., disposed) on at least one side (*e.g*., one side or both opposite sides) of the base film. The electrode current collector may include a substrate, and the substrate may have, for example, a structure including a base film and a metal thin-film layer applied (*e.g*., disposed) on at least one side (*e.g*., one side or both opposite sides) of the base film. The interlayer 150, 150a, 150b as described above may be further disposed on the metal thin-film layer. For example, the base film may include a polymer. For example, the polymer may be a thermoplastic polymer. For example, the polymer may include polyethylene terephthalate (PET), polyethylene (PE), polypropylene (PP), polybutylene terephthalate (PBT), polyimide (PI), or a combination thereof. Because the base film includes a thermoplastic polymer, the base film gets liquefied in the event of a short circuit, thereby preventing or reducing a rapid increase in electric current. For example, the base film may be an insulator. The metal thin-film layer may include, for example, copper (Cu), stainless steel, titanium (Ti), iron (Fe), cobalt (Co), nickel (Ni), or an alloy thereof. The metal layer may be disconnected in the event of an overcurrent, thereby acting as an electrochemical fuse to provide protection against short circuits. A limiting current and a maximum current may be controlled or selected through controlling a thickness of the metal thin-film layer. The metal thin-film layer may be plated, formed, or deposited on the base film. As the thickness of the metal thin-film layer decreases, the limiting current and/or maximum current of the electrode current collector decrease, which may lead to an improvement in the stability of the lithium battery during a short circuit. A lead-tab may be added on the metal thin-film layer for connection to the outside. The lead-tab may be welded to the metal thin-film layer or a metal thin-film layer/base film laminate by ultrasonic welding, laser welding, spot welding, and/or the like. As the base film and/or the metal thin-film layer melt during welding, the metal thin-film layer may be electrically connected to the lead-tab. For stronger welding between the metal thin-film layer and the lead tab, a metal chip may be added between the metal thin-film layer and the lead tab. The metal chip may be a flake of the same material as the metal of the thin-film metal layer. For example, the metal chip may be a metal foil, a metal mesh, and/or the like. For example, the metal chip may be an aluminium foil, a copper foil, an SUS (stainless steel) foil, and/or the like. By welding the metal thin-film layer with the lead-tab after placing the metal chip on the metal thin-film layer, the lead-tab may be welded to a metal chip/metal thin-film layer laminate or a metal chip/metal thin-film layer/base film laminate. While the base film, the metal thin-film layer, and/or the metal chip melt during welding, the metal thin-film layer or the metal thin-film layer/metal chip laminate may be electrically connected to the lead-tab. A metal chip and/or a lead-tab may be further added on a part of the metal thin-film layer. For example, the base film may have a thickness of about 1 µm to about 50 µm, about 1.5 µm to about 50 µm, about 1.5 µm to about 40 µm, or about 1 µm to about 30 µm. With the base film having a thickness within the above ranges, the weight of the electrode assembly may be more effectively reduced. For example, the base film may have a melting point of about 100 °C to about 300 °C, about 100 °C to about 250 °C or less, or about 100 °C to about 200 °C. Because the base film has a melting point within the above ranges, the base film may easily melt and be bonded to the lead-tab while welding the lead-tab. To improve adhesion between the base film and the metal thin-film layer, a surface treatment such as corona treatment may be performed on the base film. For example, the metal thin-film layer may have a thickness of about 0.01 µm to about 3 µm, about 0.1 µm to about 3 µm, about 0.1 µm to about 2 µm, or about 0.1 µm to about 1 µm. With the metal thin-film layer having a thickness within the above ranges, the electrode assembly may provide stability while maintaining conductivity. For example, the metal chip may have a thickness of about 2 µm to about 10 µm, about 2 µm to about 7 µm, or about 4 µm to about 6 µm. With the metal chip having a thickness within the above ranges, the metal thin-film layer and the lead-tab may be more easily connected. With the electrode current collector having the above structure, the weight of the electrode may be reduced and as a result, improve in energy density. The electrode current collector may be, for example, a cathode current collector. The electrode current collector may be, for example, an anode current collector.

For example, the interlayer 150, 150a, 150b to be utilized in the preparation of a dry electrode may be disposed onto at least one side of the metal layer 200 to thereby form a laminate.

The laminate including the metal layer 200 and further including the interlayer 150, 150a, 150b disposed on one side of the metal layer 200 may be prepared by the method as follows, as an example.

For the material of the metal layer 200, refer to the electrode current collector described above. For example, the metal layer 200 utilized as a cathode current collector may be an aluminium foil. For example, the metal layer 200 utilized as an anode current collector may be a copper foil. The method by which to apply (*e.g*., dispose) one or more interlayers 150, 150a, 150b onto at least one side (e.g., one side or both opposite sides) of the metal layer 200 may involve applying (*e.g*., disposing) the interlayer 150, 150a, 150b onto at least one side (*e.g*., one side or both opposite sides) of the metal layer 200 by a dry method or a wet method, for example. Wet coating may involve, for example, coating at least one side (*e.g*., one side or both opposite sides) of the metal layer 200 with a composition including a carbon-based conductive material and a binder. The composition may include, for example, a carbon-based conductive material, a binder, and a processing solvent. For details of the carbon-based conductive material and the binder, refer to the electrodes described above. The processing solvent may be (*e.g*., may be selected from among) the solvents utilized in the preparation of an electrode slurry. The processing solvent may be removed through drying after the composition is coated on the metal layer 200. The coating method may be carried out by spin coating, dip coating, and/or the like, but the present disclosure is not limited thereto, and any suitable coating method available in the art may be utilized. The dry coating may involve, for example, coating at least one side (*e.g*., one side or both opposite sides) of the metal layer 200 with a carbon-based conductive material and/or a precursor thereof, by deposition and/or the like. The deposition may be conducted at a temperature in a range of room temperature to a high temperature, at a pressure in a range of an atmospheric pressure to a vacuum. The interlayer 150, 150a, 150b disposed by dry coating may be composed of a carbon-based material while not including a binder.

The thickness of the interlayer 150, 150a, 150b may be, for example, 30 % or less, 25 % or less, 20 % or less, 15 % or less, 10 % or less, 5 % or less, or 3 % or less relative to the thickness of the metal layer 200. The thickness of the interlayer 150, 150a, 150b may be, for example, about 0.01 % to about 30 %, about 0.1 % to about 30 %, about 0.5 % to about 30 %, about 1 % to about 25 %, about 1 % to about 20 %, about 1 % to about 15 %, about 1 % to about 10 %, about 1 % to about 5 %, or about 1 % to about 3 %, relative to the thickness of the metal layer 200. The thickness of the interlayer 150, 150a, 150b may be, for example, about 10 nm to about 5 µm, about 50 nm to about 5 µm, about 200 nm to about 4 µm, 500 nm to about 3 µm, about 500 nm to about 2 µm, about 500 nm to about 1.5 µm, about 700 nm to about 1.3 µm. With the interlayer 150, 150a, 150b having a thickness in the above ranges, adhesion between the metal layer 200 and the dry electrode film 100, 100a, 100b or between the metal layer 200 and dry electrode active material layers may further improve, and an increase in interfacial resistance may be inhibited or reduced.

For example, the interlayer 150, 150a, 150b may include a binder. With the interlayer 150, 150a, 150b including a binder, adhesion between the metal layer 200 and the dry electrode film 100, 100a, 100b, or between the metal layer 200 and dry electrode active material layers may further improve. The binder included in the interlayer 150, 150a, 150b may be, for example, a conductive binder or a nonconductive binder. The conductive binder may be, for example, an ionically conductive binder and/or an electronically conductive binder. A binder having both (*e.g*., simultaneously) ionic conductivity and electronic conductivity may belong to both (*e.g*., simultaneously) ionically conductive binders and electronically conductive binders at the same time.

The ionically conductive binder may include, for example, polystyrene sulfonate (PSS), a polyvinylidene fluoride-hexafluoropropylene copolymer (PVDF-HFP), polyvinyl fluoride (PVF), polyvinylidene fluoride (PVDF), poly(methylmethacrylate) (PMMA), polyethylene oxide (PEO), polyethylene glycol (PEG), polyacrylonitrile (PAN), polytetrafluoroethylene (PTFE), polyethylene deoxythiophene (PEDOT), polypyrrole (PPY), polyacrylonitrile (PAN), polyaniline, polyacetylene, and/or the like. The ionically conductive binder may include polar functional groups. Examples of the ionically conductive binder containing polar functional groups may include Nafion, Aquivion, Flemion, Gore, Aciplex, Morgane ADP, sulfonated poly(ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi+), and/or the like. Examples of the electronically conductive binder may include polyacetylene, polythiophene, polypyrrole, poly(p-phenylene), poly(phenylenevinylene), poly(phenylenesulfide), polyaniline, and/or the like. For example, the interlayer 150, 150a, 150b may be a conductive layer including a conductive polymer.

The binder included in the interlayer 150, 150a, 150b may be (*e.g*., may be selected from among) the binders included in the dry electrode film 100, 100a, 100b. The interlayer 150, 150a, 150b may include the same binder as the dry electrode film 100, 100a, 100b. The binder included in the interlayer 150, 150a, 150b may be, for example, a fluorinated binder. The fluorinated binder included in the interlayer 150, 150a, 150b may be, for example, polyvinylidene fluoride (PVDF). The interlayer 150, 150a, 150b may be, for example, disposed onto the metal layer 200 by a dry method or a wet method. The interlayer 150, 150a, 150b may be, for example, a binding layer including a binder.

The interlayer 150, 150a, 150b may further include, for example, a carbon-based conductive material. The binder included in the interlayer 150, 150a, 150b may be (*e.g*., may be selected from among) the carbon-based conductive materials included in the dry electrode film 100, 100a, 100b. The interlayer 150, 150a, 150b may further include, for example, the same carbon-based conductive material as the electrode active material layers. Because the interlayer 150, 150a, 150b includes a carbon-based conductive material, the interlayer 150, 150a, 150b may be, for example, a conductive layer. The interlayer 150, 150a, 150b may be, for example, a conductive layer including a binder and a carbon-based conductive material.

The interlayer 150, 150a, 150b may be, for example, disposed onto the metal layer 200 by a wet method such as spin coating, dip coating, and/or the like. The interlayer 150, 150a, 150b may be disposed on the metal layer 200 by coating and drying a composition containing a carbon-based material, a binder, and a solvent, onto the surface of the metal layer 200. In one or more embodiments, the interlayer 150, 150a, 150b may be disposed onto the metal layer 200 by a dry method, such as deposition by CVD, PVD, and/or the like. For example, the interlayer 150, 150a, 150b may be disposed onto the metal layer 200 by depositing a carbon-based conductive material on the metal layer 200 by deposition. The dry-coated interlayer 150, 150a, 150b may include (*e.g*., consist of) a carbon-based conductive material and may not include (*e.g*., may exclude) a binder. The interlayer 150, 150a, 150b may have a monolayer structure or a multilayer structure including a plurality of layers.

The dry electrode film 100, 100a, 100b utilized in the preparation of dry electrodes are manufactured by a dry method, and therefore do not contain any added (*e.g*., deliberately added) processing solvents. The dry electrode film 100, 100a, 100b may not contain, for example, a residual processing solvent. There may be a trace amount of solvent incidentally remaining in the dry electrode film 100, 100a, 100b; however, this solvent is not considered as processing solvent deliberately added. Thus, the dry electrode active layer prepared from the dry electrode film 100, 100a, 100b may be distinguished from wet electrode active layers prepared by mixing electrode components with a processing solvent, and then removing some or all of the processing solvent by drying.

The dry electrode film 100, 100a, 100b may include a dry electrode active material. The dry electrode active material may be, for example, an electrode active material that is not impregnated, dissolved or dispersed in processing solvents. The dry electrode active material may be, for example, an electrode active material that does not contain nor come into contact with processing solvents. The dry electrode active material may be, for example, an electrode active material that does not come in contact with processing solvents during the preparation of the dry electrode film 100, 100a, 100b and a dry electrode.

The dry electrode active material may be or include, for example, a dry cathode active material.

The cathode active material, which is a lithium metal oxide, for example, may utilize without limitation, any lithium metal oxide generally utilized / generally available in the art.

The cathode active material may utilize, for example, one or more of composite oxides of lithium with a metal of (*e.g*., a metal selected from among) cobalt, manganese, nickel, and/or a combination thereof, and more specifically, may utilize a compound represented by any one of the following formulas: LiₐA_{1-b}B'_{b}D₂ (wherein 0.90≤a≤1 and 0≤b≤0.5); LiₐE_{1-b}B'_{b}O_{2-c}D_{c} (wherein 0.90≤a≤1, 0≤b≤0.5, and 0≤c≤0.05); LiE_{2-b}B'_{b}O_{4-c}D_{c} (wherein 0≤b≤0.5 and 0≤c≤0.05); LiₐNi_{1-b-c}Co_{b}B'_{c}D_{α} (wherein 0.90≤a≤1, 0≤b≤0.5, 0≤c≤0.05, and 0<α≤2); LiₐNi_{1-b-c}Co_{b}B'_{c}O_{2-α}F'_{α} (wherein 0.90≤a≤1, 0≤b≤0.5, 0≤c≤0.05, and 0<α<2); LiₐNi_{1-b-c}Co_{b}B'_{c}O_{2-α}F'_{α} (wherein 0.90≤a≤1, 0≤b≤0.5, 0≤c≤0.05, and 0<α<2); LiₐNi_{1-b-c}Mn_{b}B'_{c}D_{α} (wherein 0.90≤a≤1, 0≤b≤0.5, 0≤c≤0.05, and 0<α≤2); LiₐNi_{1-b-c}Mn_{b}B'_{c}O_{2-α}F'_{α} (wherein 0.90≤a≤1, 0≤b≤0.5, 0≤c≤0.05, and 0<α<2); LiₐNi_{1-b-c}Mn_{b}B'_{c}O_{2-α}F'₂ (wherein 0.90≤a≤1, 0≤b ≤0.5, 0≤c≤0.05, and 0<α<2); LiₐNi_{b}E_{c}G_{d}O₂ (wherein 0.90≤a≤1, 0≤b≤0.9, 0≤c≤0.5, and 0.001≤d≤0.1); LiₐNi_{b}Co_{c}Mn_{d}GₑO₂ (wherein 0.90≤a≤1, 0≤b≤0.9, 0≤c≤0.5, 0≤d≤0.5, and 0.001≤e≤0.1); LiₐNiG_{b}O₂ (wherein 0.90≤a≤1 and 0.001≤b≤0.1); LiₐCoG_{b}O₂ (wherein 0.90≤a≤1 and 0.001≤b≤0.1); LiₐMnG_{b}O₂ (wherein 0.90≤a≤1 and 0.001≤b≤0.1); LiₐMn₂G_{b}O₄ (wherein 0.90≤a≤1 and 0.001≤b≤0.1); QO₂; QS₂; LiQS₂; V₂O₅; LiV₂O₅; LiI'O₂; LiNiVO₄; Li_{(3-f)}J₂(PO₄)₃ (0≤f≤2); Li_{(3-f)}Fe₂(PO₄)₃ (0≤f≤2); and LiFePO₄.

In the formulae representing the above-described compounds, A may be nickel (Ni), cobalt (Co), manganese (Mn), or a combination thereof; B' may be aluminium (Al), Ni, Co, Mn, chromium (Cr), iron (Fe), magnesium (Mg), strontium (Sr), vanadium (V), a rare earth element, or a combination thereof; D may be oxygen (O), fluorine (F), sulfur (S), phosphorus (P), or a combination thereof; E may be Co, Mn, or a combination thereof; F' may be F, S, P, or a combination thereof; G may be Al, Cr, Mn, Fe, Mg, lanthanum (La), cerium (Ce), Sr, V, or a combination thereof; Q may be titanium (Ti), molybdenum (Mo), Mn, or a combination thereof; I' may be Cr, V, Fe, Sc, yttrium (Y), or a combination thereof; and J may be V, Cr, Mn, Co, Ni, copper (Cu), or a combination thereof.

A coating layer may be provided on the surface of the above-described compound, and the resulting compound with such a coating layer may be utilized, or a mixture of the above-described compound and the compound with a coating layer may be utilized. The coating layer provided on the surface of the above-described compound may include a coating element compound, such as an oxide of a coating element, a hydroxide of a coating element, an oxyhydroxide of a coating element, an oxycarbonate of a coating element, or a hydroxycarbonate of a coating element. The compound constituting this coating layer may be amorphous or crystalline. The coating element included in the coating layer may be magnesium (Mg), aluminium (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or a mixture thereof. The method of forming the coating layer may be selected within a range that does not adversely affect the physical properties of the cathode active material. The coating method may be, for example, spray coating, a dipping method, and/or the like. A detailed description of the coating method may not be provided as it may be well understood by those in the art.

For example, the cathode active material may be a composite cathode active material.

The composite cathode active material may include, for example: a core including a lithium transition metal oxide; and a shell conforming to a surface of the core, wherein the shell may include at least one first metal oxide represented by formula MₐO_{b} (0<a≤3 and 0<b<4, and when a is 1, 2, or 3, b is not an integer); and graphene, wherein the first metal oxide may be disposed within a graphene matrix, M is at least one metal of (*e.g*., at least one metal selected from among) Groups 2 to 13, and/or Groups 15 and 16 of the Periodic Table of the Elements, the lithium transition metal oxide may contain nickel and a nickel content (*e.g*., amount) may be 80 mol% or more relative to the total number of moles of the transition metal. The shell including the first metal oxide and graphene may be disposed on the core of the composite cathode active material.

Graphene, due to agglomeration, may make it difficult to achieve a substantially uniform coating on the core. However, because the composite cathode active material of one or more embodiments utilizes a composite including a plurality of first metal oxides disposed in the graphene matrix, the shell may be disposed uniformly on the core while agglomeration of graphene is inhibited or reduced. Accordingly, by effectively preventing or reducing a contact between the core and the electrolyte, side reactions due to a contact between the core and the electrolyte may be inhibited or reduced. In one or more embodiments, reduction of nickel ions (Ni³⁺->Ni²⁺) and cation mixing by the electrolyte are suppressed or reduced, and thus, the formation of a resistive layer, such as a NiO phase, may be suppressed or reduced. Furthermore, the elution of nickel ions may also be suppressed or reduced. The shell containing graphene has flexibility. Accordingly, the volume change of the composite cathode active material during charging and discharging may be easily accommodated and thus, the occurrence of cracks inside the composite cathode active material may be suppressed or reduced. Due to high electronic conductivity of graphene, interfacial resistance between the composite cathode active material and electrolyte may decrease. Accordingly, despite the introduction of a shell including graphene, the internal resistance of the lithium battery may be maintained or reduced. In one or more embodiments, the first metal oxide has high-voltage resistance, and thus, deterioration of the lithium transition metal oxide included in the core during charging and discharging at a high voltage may be prevented or reduced. Consequently, high-temperature cycling performance and high-temperature stability of a lithium battery including the composite cathode active material may improve. For example, the shell may include a single type or kind of first metal oxide, or two or more different types (kinds) of first metal oxides. Further, the lithium transition metal oxide in the composite cathode active material, despite its high nickel content (*e.g*., amount) of 80 mol% or higher, may provide high discharge capacity and high cycling performance at the same time due to the shell containing the first metal oxide and graphene disposed on the core. Therefore, the composite cathode active material having a high nickel content (*e.g*., amount) of 80 mol% or higher, while providing improved capacity relative to a composite cathode active material with a relatively lower nickel content (*e.g*., amount), may still provide excellent or suitable lifespan characteristics. The first metal oxide may include at least one metal of (*e.g*., at least one metal selected from among) Al, Nb, Mg, Sc, Ti, Zr, V, W, Mn, Fe, Co, Pd, Cu, Ag, Zn, Sb, and/or Se.

For example, the first metal oxide may be at least one of (*e.g*., at least one selected from among) Al₂O_{z} (0<z<3), NbOₓ (0<x<2.5), MgOₓ (0<x<1), Sc₂O_{z} (0<z<3), TiO_{y} (0<y<2), ZrO_{y} (0<y<2), V₂O_{z} (0<z<3), WO_{y} (0<y<2), MnO_{y} (0<y<2), Fe₂O_{z} (0<z<3), Co₃O_{w} (0<w<4), PdOₓ(0<x<1), CuOₓ (0<x<1), AgOₓ (0<x<1), ZnOx (0<x<1), Sb₂O_{z} (0<z<3), and/or SeO_{y} (0<y<2). As the first metal oxide is disposed inside a graphene matrix, uniformity of the shell disposed on the core may improve, and high-voltage resistance of the composite cathode active material may further improve. For example, the shell may include Al₂Oₓ (0<x<3) as the first metal oxide. The shell may further include one or more types (kinds) of second metal oxides, represented by MₐO_{c} (0<a≤3 and 0<c≤4, wherein when a is 1, 2, or 3, c is an integer). M may be at least one metal of (*e.g*., at least one metal selected from among) Groups 2 to 13, 15, and/or 16 of the Periodic Table of Elements. For example, the second metal oxide may include the same metal as in the first metal oxide, and the ratio c/a of a and c in the second metal oxide may have a greater value than the ratio (b/a) of a and b in the first metal oxide. For example, c/a>b/a may be satisfied. The second metal oxide may be (*e.g*., may be selected, for example, from among) Al₂O₃, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, and/or SeO₂. The first metal oxide may be a reduction product of the second metal oxide. The first metal oxide may be obtained from a partial or complete reduction of the second metal oxide. Accordingly, the first metal oxide may have a lower oxygen content (*e.g*., amount) and a higher oxidation number of the metal, relative to the second metal oxide. For example, the shell may include Al₂Oₓ (0<x<3) as the first metal oxide, and Al₂O₃ as the second metal oxide. In the composite cathode active material, for example, the graphene included in the shell and a transition metal of the lithium transition metal oxide included in the core may be chemically bound via a chemical bond. The carbon atom (C) of the graphene included in the shell and the transition metal (Me) of the lithium transition metal oxide may be chemically bound by, for example, a C-O-Me bond via an oxygen atom (*e.g*., a C-O-Ni bond). Through chemical binding of the graphene included in the shell and the lithium transition metal oxide included in the core via a chemical bond, the core and the shell may be complexed (*e.g*., form a complex). Thus, the resulting complex may be distinguished from a simple physical mixture of graphene and lithium transition metal oxide. In one or more embodiments, the first metal oxide included in the shell and the graphene may be also chemically bound via a chemical bond. Here, the chemical bond may be, for example, a covalent bond or an ionic bond. The covalent bond may be a bond that includes, for example, at least one of an ester group, an ether group, a carbonyl group, an amide group, a carbonate anhydride group, and/or an acid anhydride group. The ionic bond may be a bond that includes, for example, a carboxylate ion, an ammonium ion, an acyl cation group, and/or the like. The thickness of the shell may be, for example, about 1 nm to about 5 µm, about 1 nm to about 1 µm, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, about 1 nm to about 20 nm, or about 1 nm to about 10 nm. Due to the shell having these ranges of thickness, the increase in internal resistance of the lithium battery including the composite cathode active material may be suppressed or reduced.

The amount of the composite included in the composite cathode active material may be 3 wt% or less, 2 wt% or less, 1 wt% or less, 0.5 wt% or less, or 0.2 wt% or less, with respect to the total weight of the composite cathode active material. The amount of the composite may be about 0.01 wt% to about 3 wt%, about 0.01 wt% to about 1 wt%, about 0.01 wt% to about 0.7 wt%, about 0.01 wt% to about 0.6 wt%, about 0.1 wt% to about 0.5 wt%, about 0.01 wt% to about 0.2 wt%, about 0.01 wt% to about 0.1 wt%, or about 0.03 wt% to about 0.07 wt%, with respect to the total weight of the composite cathode active material. With the composite cathode active material including the composite in the above ranges, the lithium battery including the composite cathode active material may have further improved cycling performance. At least one of (*e.g*., at least one selected from among) the first metal oxide and/or the second metal oxide included in the composite may have an average particle diameter of about 1 nm to about 1 µm, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, or about 7 nm to about 20 nm. As the first metal oxide and/or the second metal oxide have a particle diameter in the above nano-size ranges, the first metal oxide and/or the second metal oxide may be more uniformly distributed in the graphene matrix of the composite. Accordingly, the composite may be uniformly coated on the core without agglomeration and form a shell. In one or more embodiments, as the first metal oxide and/or the second metal oxide have a particle diameter in the above ranges, the first metal oxide and/or the second metal oxide may be more uniformly disposed on the core. Accordingly, as the first metal oxide and/or the second metal oxide are uniformly disposed on the core, high-voltage resistance may be more effectively achieved. Average particle diameters of the first metal oxide and the second metal oxide may be measured by a measurement device that utilizes a laser diffraction technique or a dynamic light scattering technique. The average particle diameter may be measured by, for example, a laser scattering particle size distribution analyzer (for example, LA-920 manufactured by HORIBA) and is a volume-based median particle diameter (D50) at a cumulative percentage of 50% from the smallest particle size.

The core included in the composite cathode active material may include, for example, a lithium transition metal oxide represented by Formulas 1 to 8:

Formula 1 LiₐCOₓM_{y}O_{2-b}A_{b}

In Formula 1, 1.0≤a≤1.2, 0≤b≤0.2, 0.9≤x≤1, 0≤y≤0.1, x+y=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A may be F, S, Cl, Br, or a combination thereof.

Formula 2 LiₐNiₓCo_{y}M_{z}O_{2-b}A_{b}

In Formula 2, 1.0≤a≤1.2, 0≤b≤0.2, 0.8≤x<1, 0≤y≤0.3, 0<z≤0.3, x+y+z=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A may be F, S, Cl, Br, or a combination thereof.

Formula 3 LiNiₓCo_{y}Mn_{z}O₂

Formula 4 LiNiₓCo_{y}Al_{z}O₂

In Formulas 3, and 4, 0.8≤x≤0.95, 0≤y≤0.2, 0<z≤0.2, and x+y+z=1.

Formula 5 LiNiₓCo_{y}Mn_{z}Al_{w}O₂

In Formula 5, 0.8≤x≤0.95, 0≤y≤0.2, 0<z≤0.2, 0<w≤0.2, and x+y+z+w=1.

Formula 6 LiₐNiₓMn_{y}M'_{z}O_{2-b}A_{b}

In Formula 6, 1.0≤a≤1.2, 0≤b≤0.2, 0<x≤0.3, 0.5≤y<1, 0<z≤0.3, x+y+z=1, M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminium (Al), boron (B), or a combination thereof, and A may be F, S, Cl, Br, or a combination thereof.

Formula 7 LiₐM1ₓM2_{y}PO_{4-b}X_{b}

In Formula 7, 0.90≤a≤1.1, 0≤x≤0.9, 0≤y≤0.5, 0.9<x+y<1.1, 0≤b≤2, M1 may be chromium (Cr), manganese (Mn), iron (Fe), cobalt (Co), nickel (Ni), copper (Cu), zirconium (Zr), or a combination thereof, M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminium (Al), silicon (Si), chromium (Cr), vanadium (V), scandium (Sc), yttrium (Y), or a combination thereof, and X may be O, F, S, P, or a combination thereof.

Formula 8 LiₐM3_{z}PO₄

In Formula 8, 0.90≤a≤1.1 and 0.9≤z≤1.1, and M3 may be chromium (Cr), manganese (Mn), iron (Fe), cobalt (Co), nickel (Ni), copper (Cu), zirconium (Zr), or a combination thereof.

The dry electrode active material may be or include, for example, a dry anode active material.

The anode active material may be any suitable material available in the art as an anode active material of a lithium battery. For example, the anode active material may include at least one of (*e.g*., at least one selected from among) lithium metal, a metal alloyable with lithium, a transition metal oxide, a non-transition metal oxide, and/or a carbon-based material. Examples of the metal alloyable with lithium may include Si, Sn, Al, Ge, Pb, Bi, Sb, a Si-Y alloy (wherein Y may be an alkali metal, an alkaline earth metal, an element of Group 13, an element of Group 14, a transition metal, a rare earth metal, or any suitable combination thereof, but not Si), a Sn-Y alloy (wherein Y may be an alkali metal, an alkaline earth metal, an element of Group 13, an element of Group 14, a transition metal, a rare earth metal, or any suitable combination thereof, but not Sn) and/or the like. For example, Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or any suitable combination thereof (e.g. Mg, Ca, Sr, Ba, Sc, Y, Ti, Zr, Hf, V, Nb, Ta, Cr, Mo, W, Re, Fe, Pb, Ru, Os, Rh, Ir, Pd, Pt, Cu, Ag, Au, Zn, Cd, B, Al, Ga, Sn, In, Tl, Ge, P, As, Sb, Bi, S, Se, Te, or any suitable combination thereof). Examples of the transition metal oxide may include a lithium titanium oxide, a vanadium oxide, a lithium vanadium oxide, and/or the like. The non-transition metal oxide may be or include, for example, SnO₂, SiOₓ (0<x≤2), and/or the like. The carbon-based material may be or include, for example, a crystalline carbon, an amorphous carbon, or a mixture thereof. The crystalline carbon may be or include, for example, graphite, such as artificial graphite or natural graphite in shapeless, plate, flake, spherical or fiber form. The amorphous carbon may be or include, for example, soft carbon (low-temperature calcined carbon) or hard carbon, mesophase pitch carbides, calcined cokes, and/or the like.

The dry electrode film 100, 100a, 100b may be or include, for example, a dry binder. The dry binder may be or include, for example, a binder that is not impregnated, dissolved or dispersed in processing solvents. The dry binder may be or include, for example, a binder that does not contain or come in contact with processing solvents. The dry binder may be or include, for example, a binder that does not come in contact with processing solvents during the preparation of the dry electrode film 100, 100a, 100b and a dry electrode. The dry binder may be or include, for example, a fibrillized binder. The fibrillized binder may act as a matrix that supports and binds together electrode active materials and other components included in the dry electrode film 100, 100a, 100b. The fibrous form of the fibrillized binder may be confirmed from, for example, a cross-sectional scanning electron microscopic image of an electrode. The fibrillized binder may have an aspect ratio (*e.g*., a ratio of the length to width of an image of the binder) of, for example, 10 or more, 20 or more, 50 or more, or 100 or more.

The dry binder may be or include, for example, polytetrafluoroethylene (PTFE), a polyvinylidene fluoride-hexapropylene (PVDF-HFP) copolymer, polyvinylidene fluoride (PVDF), polyvinyl alcohol, polyacrylonitrile, carboxymethyl cellulose (CMC), starch, hydroxypropyl cellulose, cellulose, polyvinylpyrrolidone, polyethylene, polypropylene, an ethylene-propylene-diene polymer (EPDM), sulfonated-EPDM, styrene butadiene rubber (SBR), fluororubber, or a copolymer thereof. However, the dry binder is not limited to the aforementioned examples and may be any suitable binder available in the preparation of a dry electrode. For example, the dry binder may be or include, a fluorinated binder. The fluorinated binder may be or include, for example, polytetrafluoroethylene (PTFE), a polyvinylidene fluoride-hexapropylene (PVDF-HFP) copolymer, or polyvinylidene fluoride (PVDF).

The amount of the dry binder included in the dry electrode film 100, 100a, 100b may be about 1 wt% to about 10 wt%, or about 1 wt% to about 5 wt%, with respect to the total weight of the dry electrode film 100, 100a, 100b. Because the dry electrode film 100, 100a, 100b includes the dry binder in the above ranges, binding strength of the dry electrode film 100, 100a, 100b may improve and the dry electrode thus prepared may be able to maintain high energy density.

The dry electrode film 100, 100a, 100b may further include, for example, a conductive material. The conductive material may be or include, for example, a dry conductive material. The dry conductive material may be or include, for example, a conductive material that is not impregnated, dissolved or dispersed in processing solvents. The dry conductive material may be or include, for example, a conductive material that does not contain or come into contact with processing solvents. The dry conductive material may be or include, for example, a carbon-based conductive material. The carbon-based conductive material may be or include, for example, Denka black, carbon black, graphite powder, natural graphite, artificial graphite, acetylene black, Ketjen black, carbon fibers; carbon nanotubes; and/or the like. However, the carbon-based conductive material, without being limited to the aforementioned examples, may be any suitable material available as a carbon-based conductive material in the art.

The amount of a dry conductive material included in the dry electrode film 100, 100a, 100b may be, for example, about 1 wt% to about 10 wt%, or about 1 wt% to about 5 wt%, with respect to the total weight of electrode active material layers. With the dry electrode film 100, 100a, 100b including the dry conductive material in the above ranges, the dry electrode thus prepared may have improved conductivity and a lithium battery including such a dry electrode may exhibit improved cycling performance.

The dry electrode film 100, may be prepared, for example, by the method as follows.

First, a mixture may be prepared by dry-mixing a dry electrode active material, a dry conductive material, and a dry binder.

The term "dry-mixing" as used herein refers to a process of mixing in the absence of (e.g., excluding a) processing solvent. The processing solvent may be or include, for example, a solvent utilized in the preparation of electrode slurry. For example, the processing solvent may be water, NMP, and/or the like, but the present disclosure is not limited thereto and may be any suitable processing solvent available for utilization in the preparation of electrode slurry. The dry-mixing may be carried out utilizing an agitator, at a temperature of about 25 °C to about 65 °C, at a rotation speed of about 10 rpm to about 10,000 rpm, or about 100 rpm to about 10,000 rpm. The dry-mixing may be carried out utilizing an agitator for a duration of about 1 minute to about 200 minutes, or about 1 minute to about 150 minutes.

The dry-mixing may be performed once or more, for example. First, a first mixture may be prepared through first dry-mixing of a dry electrode active material, a dry conductive material, and a dry binder. The first dry-mixing may be carried out, for example, at a temperature of about 25 °C to about 65 °C, at a rotation speed of 2,000 rpm or less, for a duration of 15 minutes or less. For example, the first dry-mixing may be carried out at a temperature of about 25 °C to about 65 °C, at a rotation speed of about 500 rpm to about 2,000 rpm, for a duration of about 5 minutes to about 15 minutes. Through the first dry-mixing, the dry electrode active material, the dry conductive material, and the dry binder may be uniformly mixed. Next, a second mixture may be prepared through second dry-mixing of a dry electrode active material, a dry conductive material, and a dry binder. For example, the second dry-mixing may be carried out at a temperature of about 25 °C to about 65 °C, at a rotation speed of 2,000 rpm or less, for a duration of 15 minutes or less. For example, the second dry-mixing may be carried out at a temperature of about 25 °C to about 65 °C, at a rotation speed of about 4,000 rpm to about 9,000 rpm, for a duration of about 10 minutes to about 60 minutes. Through the second dry-mixing, a dry mixture containing a fibrillated (*e.g*., fibrillized) dry binder may be obtained.

The agitator may be or include, for example, a kneader. The agitator may include, for example, a chamber; at least one rotary shaft disposed inside the chamber and rotating; and a blade rotatably coupled to the rotary shaft and arranged in a longitudinal direction of the rotary shaft. The blade may be or include, for example, at least one of (*e.g*., at least one selected from among) a ribbon blade, a sigma blade, a Z blade, a dispersing blade, and/or a screw blade. By including the blade, even without solvents, a dough-like mixture may be prepared by effectively mixing the electrode active material, the dry conductive material, and the dry binder. The prepared mixture may be introduced into an extrusion device and extruded into the form of a sheet. The pressure during extrusion may be, for example, about 4 MPa to about 100 MPa, or about 10 MPa to about 90 MPa. The mixture thus obtained may be in the form of a film. For example, the mixture thus obtained may be a dry electrode film 100, 100a, 100b.

The dry conductive material may utilize, for example: Denka black, carbon black, graphite powder, natural graphite, artificial graphite, acetylene black, Ketjen black, and carbon fibers; carbon nanotubes; metal powder, metal fibers, or metal tubes, such as copper, nickel, aluminium, and silver; and conductive polymers such as polyphenylene derivatives and/or the like. However, the present disclosure is not limited to the aforementioned examples, and the dry conductive material may be any suitable conductive material available in the art. The conductive material may be or include, for example, a carbon-based conductive material.

As the dry binder, a vinylidene fluoride/hexafluoropropylene copolymer, polyvinylidene fluoride, polyacrylonitrile, polymethyl methacrylate, polytetrafluoroethylene (PTFE), a mixture of the above-described polymers, and/or a styrene butadiene rubber polymer may be utilized, but the present disclosure is not limited thereto. Any suitable binder in the art may be utilized. As the solvent, N-methylpyrrolidone (NMP), acetone, and/or water may be utilized, but the present disclosure is not limited thereto, and any suitable solvent available in the art may be utilized.

It is also possible to form pores in an electrode plate by further adding a plasticizer or a pore former to an electrode active material composition.

The amount of each of the electrode active material, the dry conductive material, and the dry binder to be utilized in the electrode active material layer may be at a level generally utilized in a lithium battery.

A cathode may utilize a cathode active material as an electrode active material. For details of the cathode active material, refer to the electrode described above. An anode may utilize an anode active material as an electrode active material. For details of the anode active material, refer to the electrode described above.

In the dry electrode prepared by a dry electrode preparation method according to embodiments, if (*e.g*., when) the dry electrode active material layer is measured utilizing a surface and interfacial measuring (cutting) analysis system (SAICAS), a change in vertical relative binding force (F_{VR}) according to depth from a first point, which is 5 % away from a surface of the dry electrode active material layer in a direction from the surface of the dry electrode active material layer toward the electrode current collector, to a second point, which is 5 % away from a surface of the electrode current collector, may be 300% or less, 250% or less, 200% or less, 150% or less, or 140% or less, wherein the first and second point positions are given with respect to the total thickness of the dry electrode active material layer.

Change in vertical relative binding force is calculated by Equation 1. For the SAICAS measurement method, refer to Evaluation Example 1, for example. Change in Vertical Relative Binding Force (Fv) = [(Maximum Vertical Relative Binding Force - Minimum Vertical Relative Binding Force) / Minimum Vertical Relative Binding Force] × 100

As the change in vertical relative binding force of the dry electrode active material layer in the dry electrode is 300 % or less, as measured by the SAICAS, the distribution of constituent components of the dry electrode active material layer within the dry electrode may be more uniform (*e.g*., substantially more uniform). Further, because side reactions and an increase of internal resistance due to non-uniform (*e.g*., substantially non-uniform) distributions of constituent components in the dry electrode active material layer are inhibited or reduced, reversibility of electrode reactions may improve. Accordingly, even with a dry electrode having high loading capacity, cycling performance of the lithium battery may improve. The change in vertical relative binding force of the dry electrode active material layer may be, for example, about 10 % to about 300 %, about 20 % to about 250 %, about 30 % to about 200 %, about 40 % to about 160 %, about 50 % to about 150 %, or about 60 % to about 140 %.

In the dry electrode prepared by a dry electrode preparation method according to embodiments, if (*e.g*., when) the dry electrode active material layer is measured utilizing a surface and interfacial measuring (cutting) analysis system (SAICAS), a horizontal binding force ratio of a second horizontal binding force (F_{HA2}) at a second point to a first horizontal binding force (F_{HA1}) at a first point may be 50% or more, wherein the second point is 10 % away from a surface of the electrode current collector with respect to the total thickness of the cathode active material layer, and the first point is 10 % away from a surface of the dry electrode active material layer in a direction from the surface of the dry electrode active material layer toward the electrode current collector with respect to the total thickness of the cathode active material layer.

For example, horizontal relative binding force ratio is represented by Equation 2. Horizontal Relative Binding Force Ratio = [2nd Horizontal Binding Force (FHA2)/1st Horizontal Binding Force (FHA1)] × 100

As the horizontal relative binding force ratio in the dry electrode is 50 % or more, as measured by the SAICAS, the distribution of constituent components within the electrode may be more uniform (*e.g*., substantially more uniform). With the electrode having a horizontal relative binding force ratio in the above ranges, a lithium battery employing the electrode may have further improved cycling performance. For example, the horizontal relative binding force ratio may be about 50 % to about 300 %, about 50 % to about 250 %, about 50 % to about 200 %, about 50 % to about 150 %, or about 50 % to about 100 %.

According to one or more embodiments, a dry electrode 400 may be provided. For example, the dry electrode 400 may be prepared by the method described above.

A dry electrode according to one or more embodiments may include: a metal layer 200; and dry electrode active material layers spaced (*e.g*., separated, spaced apart and/or apart) from each other and applied (*e.g*., disposed) on at least one side (e.g., one side or both opposite sides) of the metal layer 200. Between the dry electrode active material layers spaced (*e.g*., separated, spaced apart and/or apart) from each other, an uncoated portion revealing the metal layer 200 may be disposed. The dry electrode active material layers may have, for example, anisotropic tensile strength. Because one surface of the metal layer 200 adjacent to one side of the dry electrode active material layer and uncoated by the dry electrode active material layers is free of burrs or recesses in the dry electrode, side reactions and/or degradation caused by burrs and/or recesses during charging and discharging are inhibited or reduced, and therefore, the cycling performance of a lithium battery including the dry electrode may improve.

The dry electrode may include, for example: a metal layer 200; an interlayer (or interlayers) 150, 150a, 150b applied (*e.g*., disposed) on at least one side (e.g., one side or both opposite sides) of the metal layer 200; and dry electrode active material layers disposed on the interlayer 150, 150a, 150b. The dry electrode may be free of dry electrode active material layers directly disposed on an electrode current collector. Between the dry electrode active material layers spaced (*e.g*., separated, spaced apart and/or apart) from each other, an uncoated portion revealing the metal layer 200 may be disposed. The dry electrode active material layers may have, for example, anisotropic tensile strength. One surface of the electrode current collector disposed adjacent to one side of the dry electrode active material layers and uncoated by the interlayers 150, 150a, 150b may be free of burrs or recesses. For detailed descriptions of the interlayers 150, 150a, 150b and the dry electrode active material layers, refer to the dry electrode preparation method described above. The dry electrode active material layers may have substantially the same composition and/or properties as the dry electrode film 100, 100a, 100b. The dry electrode may be or include, for example, a dry cathode and/or a dry anode.

A lithium battery 1 according to one or more embodiments may include the dry electrode described above.

According to one or more embodiments, the lithium battery 1 may include: a cathode; an anode; and an electrolyte disposed between the cathode and the anode, wherein at least one of the cathode and/or the anode may be formed from, or by cutting from, a dry electrode prepared by the method of preparing a dry electrode described above.

The lithium battery 1 may be or include, for example, a lithium ion battery, a lithium solid battery, a lithium air battery, and/or the like.

The lithium battery 1 may be prepared by the method described in more detail below as an example. However, the method of preparing the lithium battery is not necessarily limited to this method and may vary according to conditions required or desired.

First, one or both of a cathode and an anode may be prepared following the dry electrode preparation method described above. In one or more embodiments, if (*e.g*., when) one electrode of the cathode and the anode is prepared by the electrode preparation method described above, the other electrode may be prepared by a wet preparation method. For example, the other electrode may be prepared by preparing an electrode slurry containing an electrode active material, a conductive material, a binder, and a solvent, and then coating and drying the prepared electrode slurry on an electrode current collector. The conductive material and the binder included in the electrode prepared by the wet method may be (*e.g*., may be selected from among) the conductive materials and binders utilized in the preparation of dry electrode described above.

Next, a separator to be positioned between the cathode and the anode may be prepared.

The separator may be any separator generally or suitably utilized in a lithium battery. For the separator, for example, any separator capable of retaining a large quantity of electrolytes while exhibiting low resistance to ion migration in electrolytes may be utilized. For example, the separator may be in the form of non-woven fabric or woven fabric, formed of a material of (*e.g*., selected from among) glass fiber, polyester, Teflon, polyethylene, polypropylene, polytetrafluoroethylene (PTFE), and/or a combination thereof. A lithium ion battery may utilize, for example, a rollable separator formed of polyethylene, polypropylene, and/or the like. A lithium ion polymer battery may utilize, for example, a separator with excellent or suitable organic electrolyte immersion capacity.

The separator may be prepared by the method described in more detail below as an example. However, the method by which to prepare the separator is not necessarily limited to this method and may be adjusted according to conditions required or desired.

First, a separator composition may be prepared by mixing a polymer resin, a filler, and a solvent. The separator composition may be directly coated and dried on an electrode to thereby form a separator. In one or more embodiments, the separator may be formed by casting and drying the separator composition on a support, and then laminating a separator film exfoliated from the support onto an electrode.

The polymer utilized in the separator preparation is not particularly limited, and may utilize any suitable polymer available for utilization in a binder of an electrode plate. For example, the polymer may utilize a vinylidene fluoride/hexafluoropropylene copolymer, polyvinylidene fluoride (PVDF), polyacrylonitrile, polymethyl methacrylate, or a mixture thereof.

Next, an electrolyte may be prepared.

The electrolyte may be or include, for example, an organic electrolyte. The organic electrolyte may be prepared by dissolving a lithium salt in an organic solvent.

For the organic solvent, any organic solvent available in the art may be utilized. The organic solvent may be or include, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, and/or one or more suitable mixtures thereof.

For the lithium salt, any suitable lithium salt available in the art may be utilized. For example, the lithium salt may be LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (wherein x and y are natural numbers), LiCl, Lil, or any suitable mixture thereof.

In one or more embodiments, the electrolyte may be a solid electrolyte. The solid electrolyte may be or include, for example, a boron oxide, a lithium oxynitride, and/or the like, but the present disclosure is not limited thereto, and may utilize any suitable solid electrolyte available in the art. The solid electrolyte may be formed on the anode by methods such as sputtering for example, or a separate solid electrolyte sheet may be placed on the anode. The solid electrolyte may be or include, for example, an oxide-based solid electrolyte or a sulfide-based solid electrolyte.

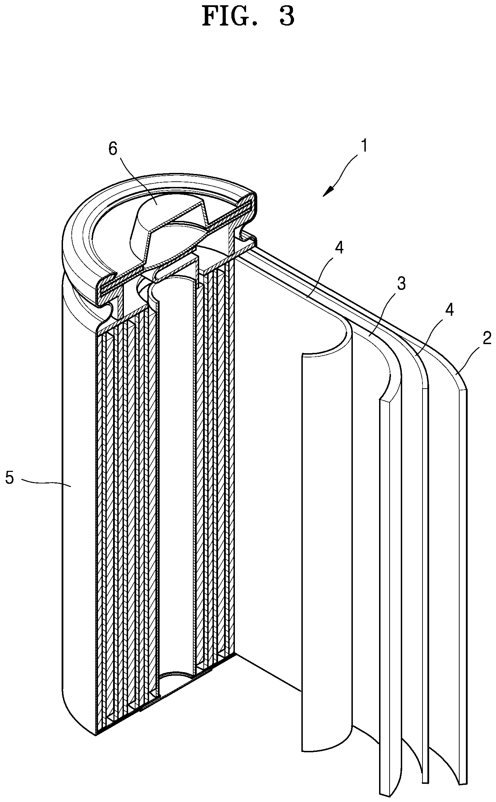

Referring to FIG. 3, a lithium battery 1 according to embodiments may include a cathode 3, an anode 2, and a separator 4. The cathode 3, the anode 2, and the separator 4 may be wound or folded to form a battery structure. The battery structure may be accommodated in a battery case 5. The battery case 5 may be injected with an organic electrolyte and sealed with a cap assembly 6, thereby completing the preparation of the lithium battery 1. The battery case 5 may be a cylindrical type or kind, but the present disclosure is not limited thereto, and may be a prismatic type or kind, a thin-film type or kind, and/or the like.

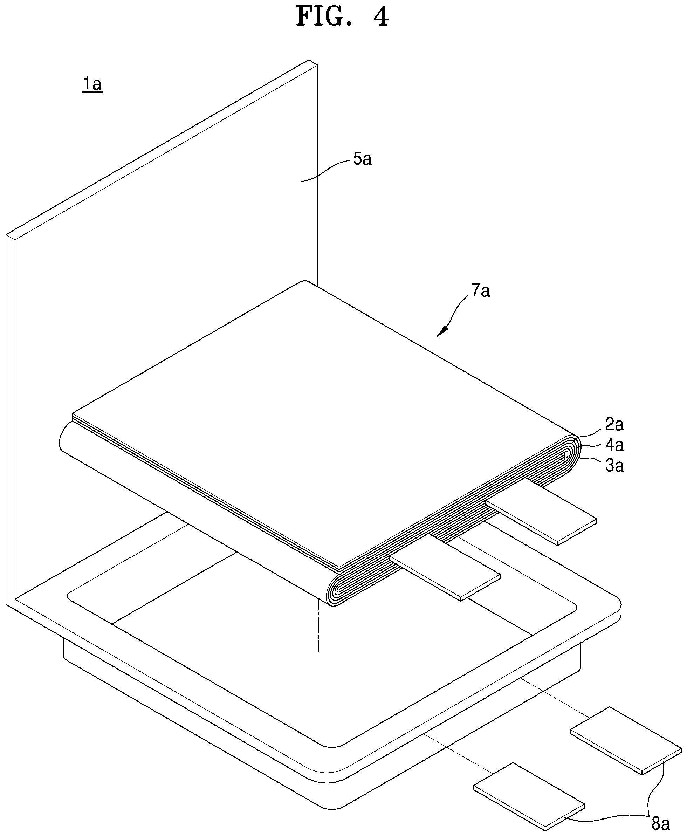

Referring to FIG. 4, a lithium battery 1a according to embodiments may include a cathode 3a, an anode 2a, and a separator 4a. The separator 4a may be disposed between the cathode 3a and the anode 2a, and the cathode 3a, the anode 2a, and the separator 4a may be wound or folded to form a battery structure 7a. The formed battery structure 7a may be accommodated in a battery case 5a. An electrode tab 8a, acting as an electrical path for guiding an electrical current generated in the battery structure 7a to the outside, may be included. The battery case 5a may be injected with an organic electrolyte and sealed, thereby completing the preparation of the lithium battery 1a. The battery case 5a may be a prismatic type or kind, but the present disclosure is not limited thereto, and may also be, for example, a cylindrical type or kind, a thin-film type or kind, and/or the like.

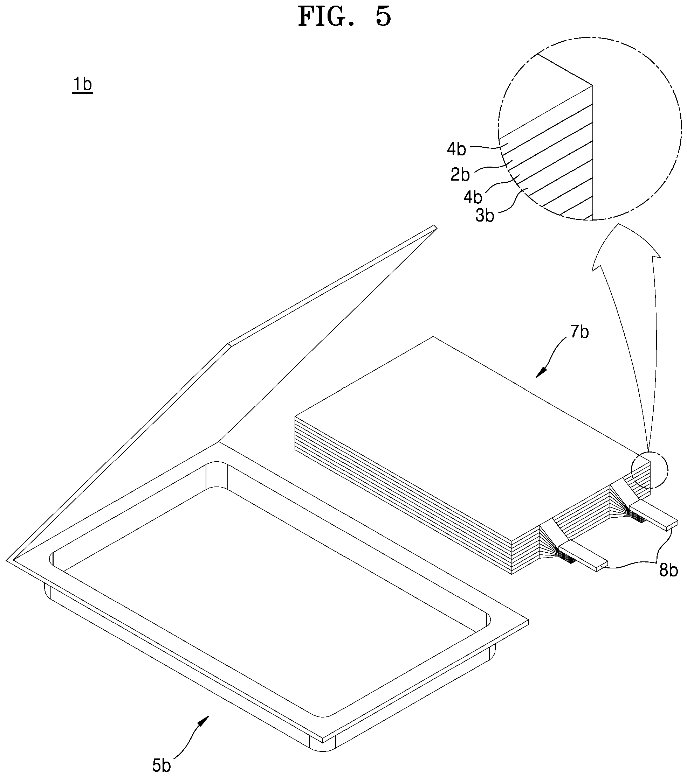

Referring to FIG. 5, a lithium battery 1b according to embodiments may include a cathode 3b, an anode 2b, and a separator 4b. The separator 4b may be disposed between the cathode 3b and the anode 2b to form a battery structure 7b. The battery structure 7b may be stacked in a bi-cell structure and then accommodated into a battery case 5b. An electrode tab 8b, acting as an electrical path for guiding an electrical current generated in the battery structure 7b to the outside, may be included. The battery case 5b may be injected with an organic electrolyte and sealed, thereby completing the preparation of the lithium battery 1b. The battery case 5b may be a prismatic type or kind, but the present disclosure is not necessarily limited thereto, and may also be, for example, a cylindrical type or kind, a thin-film type or kind, and/or the like.

A pouch-type or kind lithium battery corresponds to the lithium battery shown in FIGs. 3 to 5 that uses a pouch as a battery case. The pouch-type or kind lithium battery may include one or more battery structures. The battery structure may be formed by disposing a separator between a cathode and an anode. The battery structures may be stacked in a bi-cell structure, and immersed in an organic electrolyte, and then accommodated and sealed in a pouch, thereby completing the preparation of a pouch-type or kind lithium battery. For example, the cathode, the anode, and the separator described above may be simply stacked in the form of an electrode assembly and then accommodated in a pouch, or may be wound or folded into a jelly roll-type or kind electrode assembly and then accommodated in a pouch. Subsequently, the pouch may be injected with an organic electrolyte and then sealed, thereby completing the preparation of a lithium battery.

The lithium battery, due to its excellent or suitable lifespan characteristics and high-rate capability, may be utilized in an electric vehicle (EV), for example. For example, the lithium battery may be utilized in a hybrid vehicle, such as a plug-in hybrid electric vehicle (PHEV) and/or the like. Also, the lithium battery may be utilized in any field that requires a large amount of energy storage. For example, the lithium battery may be utilized in an electric bicycle, a power tool, and/or the like.

Multiple units of the lithium battery may be stacked together to form a battery module, and multiple units of the battery module may form a battery pack. Such a battery pack may be utilized in all types (kinds) of devices in which high capacity and high output are required. For example, the battery pack may be utilized in a laptop computer, a smartphone, an electric vehicle, and/or the like. The battery module may include, for example, a plurality of batteries and a frame holding the batteries. The battery pack may include, for example, a plurality of battery modules and a bus bar connecting these battery modules. The battery module and/or the battery pack may further include a cooling device. A plurality of battery packs may be controlled or selected by a battery management system. The battery management system may include a battery pack, and a battery control device connected to the battery pack.

The present disclosure will be described in greater detail through Examples and Comparative Examples. However, it will be understood that the following examples are provided merely to illustrate the present disclosure, and should not be construed as limiting the scope of the present disclosure.

### Preparation of Lithium Battery Half Cell

### Example 1: Dry Electrode Film, 1st Speed : 2nd Speed = 100 : 50

### Metal Layer

Referring to FIGs. 1A to 1D, an aluminium thin film 200 wound on a first winding roll 10 was prepared. The thickness of the aluminium thin film was about 12 µm.

The aluminium thin film from the first winding roll 10 was supplied at the first speed V1 between the first laminator roll 30a and the second laminator roll 30b, passed between the first laminator roll 30a and the second laminator roll 30b, and then wound on a third winding roll.

Before supplying an aluminium thin film 200 between the first laminator roll and the second laminator roll, a plurality of carbon layers were repeatedly disposed on one side of the aluminium thin film as an interlayer, such that the carbon layers were spaced (*e.g.,* separated, spaced apart and/or apart) at a substantially uniform interval in a length direction of the aluminium thin film.

The region in which the plurality of carbon layers 150, 150a, 150b was spaced (*e.g.,* separated, spaced apart and/or apart) from each other on the aluminium thin film 200 is referred to as the first region 500a, and the region in which the carbon layers 150, 150a, 150b were not disposed, revealing the aluminium thin film, is referred to as the second region 500b.

The ratio of length L1 of the first region 500a to length L2 of the second region 500b in the length direction of the aluminium thin film 200 was 50:1. The ratio of width W1 of the aluminium thin film 200 to length L2 of the second region in the length direction of the aluminium thin film 200 was 5:1.

The carbon layers 150, 150a, 150b were disposed on the aluminium thin film 200 by coating and then drying a composition containing a carbon conductive material (Denka Black) and polyvinylidene fluoride (PVDF) on the aluminium thin film 200. The thickness of the carbon layers 150, 150a, 150b disposed on one side of the aluminium thin film 200 was about 1 µm.

### Dry Electrode Film

LiNi_{0.91}Co_{0.05}Al_{0.04}O₂ (hereinafter referred to as NCA91) having an average particle diameter (D50) of 15 µm as a dry cathode active material, Denka Black as a dry conductive material, and polytetrafluoroethylene (PTFE) as a conductive binder in a weight ratio of 96:1.8:2.2 were introduced into a blade mixer, and subjected to first dry mixing at 25 °C at a rate of 1,000 rpm for 10 minutes, to thereby prepare a first dry mixture in which the cathode active material, the conductive material, the binder were uniformly mixed.

Subsequently, to allow the fibrillization of the dry binder to proceed, the first mixture was further subjected to second mixing for 20 minutes at 25 °C at a rate of 5,000 rpm to thereby prepare a second dry mixture. No solvent was utilized in the preparation of the first mixture and the second mixture. The prepared second mixture was introduced into an extruder and extruded to prepare a dry cathode film. The pressure during extrusion was about 50 MPa. The prepared dry cathode film was a self-standing film.

The prepared dry cathode film was wound on the 2-1 winding roll 20a and the 2-2 winding roll 20b, respectively.

### Dry Electrodes

Referring to FIGs. 1A to 1D, the rotational speeds of the first winding roll 10 and the third winding roll were controlled or selected such that the aluminium thin film 200 was supplied at a first speed V1 between the first laminator roll 30a and the second laminator roll 30b.

The rotational speeds of the 2-1 winding roll 20a and the first laminator roll 30a were controlled or selected such that the dry cathode film 100a was supplied onto the aluminium thin film 200 at the first speed V1 from the 2-1 winding roll 20a through the first laminator roll 30a.

The dry cathode film 100a remained attached to a surface of the first laminator roll 30a by a plurality of vacuum suction holes 45 disposed on the surface of the first laminator roll 30a.

FIG. 1E shows a plan view of the aluminium thin film 200 utilized in Example 1, wherein the carbon layers 150b were intermittently coated on the first region 500a on one side of the aluminium thin film 200. In one or more embodiments, the carbon layers 150a were intermittently coated on the first region 500a on the other side of the aluminium thin film 200.

First, referring to FIG. 1A, while the first region 500a of the aluminium thin film 200 is passing between the first laminator roll 30a and the second laminator roll 30b, the dry cathode film 100a may be supplied onto the carbon layers 150a of the first region 500a of the aluminium thin film 200 at a second speed V2 from the first laminator roll 30a to thereby laminate the dry cathode film 100a onto one side of the aluminium thin film 200 and dispose the dry cathode active material layer 300a onto one side of the electrode current collector 200.

The second speed V2 at which the dry cathode film 100a was supplied was the same as the first speed V1 at which the aluminium thin film 200 was supplied.

Before the second region 500b adjacent to the first region 500a of the aluminium thin film 200 was supplied between the first laminator roll 30a and the second laminator roll 30b, while the dry cathode film 100a, which corresponds to a machine direction length MD1 of the second region 500b of the aluminium thin film 200, was attached to the surface of the first laminator roll 30a, a first cutting line CL1 and a second cutting line CL2 were concurrently (*e.g.,* simultaneously) introduced into the dry cathode film 100a by a pair of knives 50, 50a, 50b, spaced (*e.g.,* separated, spaced apart and/or apart) from each other by a length MD2A that corresponds to 50% of the MD1 of the second region 500b.

Subsequently, while the second region of the aluminium thin film passes between the first laminator roll and the second laminator roll, the speed of the dry cathode film onto the second region of the aluminium thin film from the first roll was decreased to a second speed V2, which is 50% of the first speed V1, thereby delaying the supply of the dry cathode film while cutting the dry cathode film being supplied, such that a dry cathode active material layer was not formed on the second region of the aluminium thin film.

Subsequently, while the first region of the aluminium thin film was passing between the first laminator roll and the second laminator roll, the speed of the dry cathode film being supplied from the first roll onto the carbon layers on the first region of the aluminium thin film was increased back to the first speed V1, to laminate the dry cathode film on one side of the aluminium thin film and form the dry cathode active material layer 300a on one side of the electrode current collector 200. The dry cathode film 100a disposed between the first cutting line CL1 and the second cutting line CL2, after passing between the first laminator roll 30a and the second laminator roll 30b, may be easily delaminated from the surface of the first laminator roll 30a by blocking a plurality of suction holes 45 disposed on the surface of the first laminator roll 30a or utilizing a separate delamination device (not illustrated).

The process described above was sequentially repeated on the first region 500a and the second region 500b on one side of the aluminium thin film 200 to intermittently dispose the dry electrode active material layer 300a on the aluminium thin film 200.

Referring to FIGs. 1A to 1D, the same process was sequentially carried out concurrently (*e.g*., simultaneously) on the other side of the aluminium thin film 200. To coat the other side of an aluminium thin film 200 with the dry cathode film 100b, the rotation speed of the 2-2 winding roll 20b and the second laminator roll 30b was controlled or selected such that the dry cathode film 100b was supplied at a first speed V1 from the 2-2 winding roll 20b to the second laminator roll 30b.

As described above, a dry cathode having a dry cathode active material layer intermittently laminated on an aluminium thin film was prepared by disposing the dry cathode film on the first region and not disposing the dry cathode film on the second region while the first region and the second region of the aluminium thin film are supplied from the first roll.

FIG. 1F shows a plan view of the dry electrode prepared in Example 1, which is a dry electrode 400 in which a cathode active material layer 300b is intermittently laminated on a first region 500a on one side of an aluminium thin film 200.

### Preparation of Coin Cells

A coin cell was prepared utilizing a portion cut from the dry cathode prepared above as a cathode, and lithium metal as a counter electrode, and utilizing a PTFE separator, and a solution containing 1.3 M LiPF₆ dissolved in ethylene carbonate (EC) + ethyl methyl carbonate (EMC) + dimethyl carbonate (DMC) (3:4:3 volume ratio) as an electrolyte. Because the second region is cut at a point that is spaced (*e.g.,* separated, spaced apart and/or apart) from the dry cathode active material layer by a distance, there was no formation of burrs and/or recesses around the dry cathode active material layer.

### Example 2: Dry Electrode Film, 1st Speed : 2nd Speed = 100 : 70

A dry electrode and a lithium battery were prepared following substantially the same process as Example 1, except that the second speed V2 was changed to 70% of the first speed V1 and the distance between the pair of knives 50a, 50b was changed to 70% of the second region distance.

### Example 3: Dry Electrode Film, 1st Speed : 2nd Speed = 100 : 30

A dry electrode and a lithium battery were prepared following substantially the same process as Example 1, except that the second speed V2 was changed to 30% of the first speed V1 and the distance between the pair of knives 50a, 50b was changed to 30% of the second region distance.

### Example 4: Dry Electrode Film, 1st Speed : 2nd Speed = 100 : 0

A dry electrode and a lithium battery were prepared following substantially the same process as Example 1, except that the second speed V2 was changed to 0% of the first speed V1 and the distance between the pair of knives 50a, 50b was changed to 0.

### Comparative Example 1: Dry Electrode Film, 1st Speed : 2nd Speed = 100 : 100

A dry electrode and a lithium battery were prepared following substantially the same process as Example 1, except that the second speed V2 was maintained to be the same as the first speed V1, and the knives 50a, 50b were not utilized.

Because the first speed V1 and the second speed V2 were the same, the dry electrode film was disposed on both (e.g., simultaneously) the first region and the second region.

Using a laser cutter along the boundary between the first region and the second region, the dry electrode film was removed from the second region, thereby producing a dry cathode having a dry cathode active material layer disposed only in the first region.

While removing the second region from the dry electrode film, damage was caused to the surface of the cathode current collector by the laser. Burrs and/or recesses adjacent to the cut portion of the prepared dry cathode active material layer were formed in the cathode current collector.

### Comparative Example 2: Dry Powder

### Metal Layer

A metal layer was prepared following the same process as Example 1, except that the carbon layers were disposed only on one side of the aluminium foil.

### Dry Electrode Film

LiNi_{0.91}Co_{0.05}Al_{0.04}O₂ (hereinafter referred to as NCA91) having an average particle diameter (D50) of 15 µm as a dry cathode active material, Denka Black as a dry conductive material, and polytetrafluoroethylene (PTFE) as a conductive binder in a weight ratio of 96:1.8:2.2 were introduced into a blade mixer, and subjected to first dry mixing at 25 °C at a rate of 1,000 rpm for 10 minutes, to thereby prepare a first dry mixture in which the cathode active material, the conductive material, the binder were uniformly mixed.

### Dry Electrodes

A dry electrode film 100 was prepared following substantially the same process as Example 1, except that instead of the dry cathode film 100b, the first dry mixture prepared above was supplied at the first speed V1 between the aluminium thin film 200 and the first laminator roll 30a or the second laminator roll 30b, and the speed of the first laminator roll 30a or the second laminator roll 30b was kept constant.

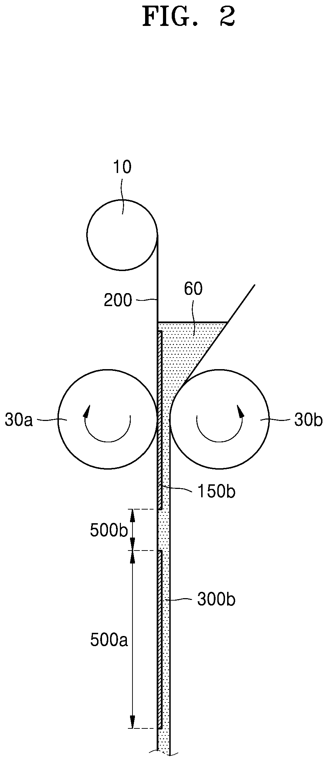

Referring to FIG. 2, the first dry mixture 60 and the aluminium thin film 200 may be concurrently (e.g., simultaneously) passed between the first laminator roll 30a and the second laminator roll 30b and laminated to thereby form the dry cathode active material layer 300b on one side of the electrode current collector 200.

While the first dry mixture passes through the first laminator roll 30a and the second laminator roll 30b, the dry binder underwent fibrillization such that the dry cathode active material layer 300b was formed on one side of the electrode current collector 200.

The dry cathode active material layer 300b was formed on both (e.g., simultaneously) the first region 500a of the electrode current collector 200, which includes the carbon layers 150b, and the second region 500b of the electrode current collector 200, which is free of the carbon layer 150b. The dry cathode 400 was prepared by selectively removing the dry cathode active material layer 300b disposed on the second region 500b of the electrode current collector 200.

By utilizing a laser cutter along the boundary between the first region 500a and the second region 500b, the dry cathode film 100b may be selectively removed from the second region 500b to produce a dry cathode in which the dry cathode active material layer 300b is disposed only on the first region 500a.

While removing the second region from the dry electrode film, damage was caused to the surface of the cathode current collector by the laser. Burrs and/or other non-smooth features adjacent to the cut portion of the prepared dry cathode active material layer were formed in the cathode current collector. Cracks were formed on the surface of the dry cathode active material layer included in the dry cathode. It was considered that cracks formed in the prepared dry cathode active material layer were due to a high pressure applied for fibrillization of the dry binder during the preparation of the dry cathode.

### Preparation of Coin Cells

A coin cell was prepared utilizing a portion cut from the dry cathode prepared above as a cathode, and lithium metal as a counter electrode, and utilizing a PTFE separator, and a solution containing 1.3 M LiPF₆ dissolved in ethylene carbonate (EC) + ethyl methyl carbonate (EMC) + dimethyl carbonate (DMC) (3:4:3 volume ratio) as an electrolyte.

### Comparative Example 3: Wet Cathode

### Preparation of Wet Cathode

LiNi_{0.91}Co_{0.05}Al_{0.04}O₂ (hereinafter referred to as NCA91) having an average particle diameter (D50) of 15 µm as a cathode active material, Denka Black as a dry conductive material, and polytetrafluoroethylene (PTFE) as a conductive binder were mixed in a weight ratio of 96:1.8:2.2, and the resulting mixture was mixed with N-methylpyrrolidone (NMP) in an agate mortar to prepare a slurry for forming a cathode active material layer. The slurry was bar-coated on one side of a 12 µm-thick aluminium foil cathode current collector, and dried at room temperature, and dried again under vacuum at 120 °C to thereby introduce a cathode active material layer and prepare a laminate. The prepared laminate was rolled to thereby produce a cathode. The pressure during rolling was 3.0 ton/cm². The cathode active material layer of the cathode of Comparative Example 1 had substantially the same thickness as the cathode active material layer of the cathode of Example 1.

### Reference Example 1: Interlayer-Free Dry Cathode

A dry cathode was prepared following substantially the same process as Example 1, except that a 12 µm-thick aluminium thin film, free of a carbon layer as an interlayer, was utilized as a cathode current collector.

The dry cathode active material layer was partially exfoliated from the aluminium foil.

### Preparation of Coin Cells

Because the dry cathode active material layer remained partially exfoliated from the cathode current collector, manufacturing of a coin cell was not proceeded.

### Evaluation Example 1: Vertical Binding Force Evaluation of Cathode Active Material Layer I

Using SAICAS (SAICAS EN-EX, Daipla Wintes, JAPAN), adhesion characteristics of the cathode active material layers of the dry cathode of Example 1 and the wet cathode prepared in Comparative Example 3 were analyzed.

With a 1 mm-wide diamond blade, constant speed analysis was performed to measure a vertical binding force (Fv) according to depth (clearance angle = 10°; rake angle = 20°; shear angle = 45°; horizontal velocity = 4 µm/s; and vertical velocity = 0.4 µm/s).

First, a first constant speed analysis was performed from a first point on the surface of the composite cathode active material to the surface of the cathode current collector, and the cathode active material layer was removed by moving the blade horizontally along the surface of the cathode current collector. Then, at a position moved back by 10 µm from the first point, a second constant-speed analysis was performed under the same conditions as the first constant-speed analysis. The data obtained from the second constant-speed analysis were utilized.

In the cathode active material layer, a vertical binding force of the cathode active material layer was measured, and the measured data were normalized to binding force graph areas to derive a vertical relative binding force (F_{VR}) of the cathode active material layer according to depth.

For the vertical binding force of the cathode active material layer, the data measured from a section between a first point, which is 5 % away from the surface of the cathode active material layer, and a second point, which is 5 % away from the surface of the electrode current collector, were utilized wherein the first point and the second point are given with respect to the total thickness of the cathode active material layer. For example, data near the surface of the cathode active material layer and the surface of the electrode current collector were excluded in order to avoid measurement errors.

Using Equation 1, a change in vertical relative binding force (F_{VR}) was calculated from the derived vertical relative binding force (F_{VR}) data of the cathode active material layer. Further, arithmetic mean values were calculated from the derived vertical relative binding force (F_{VR}) data of the cathode active material layer. Change in Vertical Relative Binding Force (FVR) = [(Maximum Vertical Relative Binding Force - Minimum Vertical Relative Binding Force) / Minimum Vertical Relative Binding Force] × 100

The result of measurement shows that the change in vertical relative binding force of the cathode active material layer included in the dry cathode of Example 1 was 300 % or less.

Thus, it was found that the cathode active material layer (e.g., dry electrode film) of Example 1 has substantially uniform binding force and composition distributions regardless of the position in a thickness direction of the cathode active material layer.

In contrast, it was found that the change in vertical relative binding force of the cathode active material layer included in the wet cathode of Comparative Example 3 was more than 400 %.

Thus, it was found that the cathode active material layer of Comparative Example 3 has a binding force and composition distribution that significantly varied depending on the position in a thickness direction of the cathode active material layer.

### Evaluation Example 2: Evaluation of Horizontal Binding Force of Cathode Active Material Layer (II)

Using SAICAS (SAICAS EN-EX, Daipla Wintes, JAPAN), adhesion characteristics of the cathode active material layers of the dry cathode prepared in Example 1 and the wet cathode prepared in Comparative Example 3 were analyzed.

With a 1 mm-wide diamond blade, constant speed analysis was performed to measure a horizontal binding force (F_{H}) according to depth (clearance angle = 10°; rake angle = 20°; shear angle = 45°; horizontal velocity = 4 µm/s; and vertical velocity = 0.4 µm/s).

First, a first constant speed analysis was performed from a first point on the surface of the composite cathode active material to the surface of the cathode current collector, and the cathode active material layer was removed by moving the blade horizontally along the surface of the cathode current collector. Then, at a position moved back by 10 µm from the first point, a second constant speed analysis was performed under the same conditions as the first constant-speed analysis. The data obtained from the second constant speed analysis were utilized.

With respect to the total thickness of the cathode active material layer, a first horizontal binding force (F_{H1}) was measured at a first point, which is 10 % away from the surface of the cathode active material layer, and a second horizontal binding force (F_{H2}) was measured at a second point, which is 10 % away from the surface of the cathode current collector, where the first point and the second point are given with respect to the total thickness of the cathode active material layer.

A horizontal binding force ratio between the first point and the second point is defined by Equation 2. Horizontal Binding Force Ratio Between First Point and Second Point (%) = [FH2/FH1/× 100

The result of measurement shows that the horizontal binding force ratio of the cathode active material layer of Example 1 was 60 % or more.

In contrast, it was found that the horizontal binding force ratio of the cathode active material layer of Comparative Example 3 was less than 50 %.

Thus, the horizontal binding force ratio of the cathode active material layer of Example 1 was higher than the cathode active material layer of Comparative Example 3.

Therefore, it was found that the cathode active material layer (e.g., dry electrode film) of Example 1 shows more substantially uniform binding force and composition distribution, compared to the cathode active material layer of Comparative Example 3.

### Evaluation Example 3: Evaluation of Room-Temperature High-Rate Discharge Capability

The lithium batteries prepared in Examples 1 to 4 and Comparative Examples 1 and 2 were each charged at a constant current of 0.1 C (e.g., C rate) at 25 °C until the battery voltage reached 4.4 V (vs. Li) and then, while maintaining 4.4 V in a constant voltage mode, the charging was cut-off at a current of 0.05 C. Subsequently, the battery was discharged at a constant current rate of 0.1 C until the battery voltage reached 2.8 V (vs. Li) during discharge (formation cycle).

The lithium battery after the formation cycle was charged at 25 °C at a constant current of 0.5 C until the battery voltage reached 4.4 V (vs. Li). Subsequently, the battery was discharged at a constant current of 0.5 C until the battery voltage reached 2.8 V (vs. Li) during discharge, and this cycle was repeated under the same conditions up to the 100^{th} cycle (repeated 100 times).

Throughout the charge-discharge cycles above, a rest period of 10 minutes was provided after each charge/discharge cycle. A part of the room-temperature cycling test results is shown in Table 1. Capacity retention at the 100^{th} cycle is defined by Equation 3. Capacity Retention [%] = [Discharge Capacity in 100th cycle / Discharge Capacity in 1st cycle] x 100

**Table 1**

| | Capacity Retention [%] |
|---|---|
| Example 1 | 95 |
| Example 2 | 96 |
| Example 3 | 95 |
| Example 4 | 96 |
| Comparative Example 1 | 88 |
| Comparative Example 2 | 85 |

As shown in Table 1, the lithium batteries of Examples 1 to 4 show improved room-temperature lifespan characteristics compared to the lithium batteries of Comparative Examples 1 and 2.

It was considered that the deterioration of lifespan characteristics of the lithium battery of Comparative Example 1 was due to increased side reactions attributable to burrs and/or recesses formed by laser cutting near the periphery of the cathode active material layer.

It was considered that the deterioration of lifespan characteristics of the lithium battery of Comparative Example 2 was due to increased side reactions attributable to burrs and/or recesses formed by laser cutting near the periphery of cathode active material layer, and also due to additional side reactions caused by cracks formed in the surface of cathode active material layer.

According to one aspect of the present disclosure, by intermittently supplying a dry electrode film onto an electrode current collector, a dry electrode having an electrode active material layer intermittently coated on the electrode current collector may be provided (*e.g.,* easily provided).

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (*i.e*., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

The device or system for manufacturing the dry electrode, the portable device, vehicle, and/or the battery, *e.g.,* a battery controller, and/or any other relevant devices or components according to embodiments of the present disclosure described herein may be implemented utilizing any suitable hardware, firmware (*e.g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments. Although the embodiments of the present disclosure have been described, it is understood that the present disclosure should not be limited to these embodiments, but one or more suitable changes and modifications can be made by one ordinary skilled in the art within the scope of the present disclosure as defined by the following claims and equivalents thereof.

Embodiments are set out in the following clauses:
Clause 1. A method of preparing a dry electrode, the method comprising: providing a metal layer at a first speed;
   providing a dry electrode film at a second speed, while intermittently providing the dry electrode film at a third speed less than the second speed; and
   forming a dry electrode active material layer by intermittently disposing the dry electrode film on one side or both sides of the metal layer,
   wherein the dry electrode film is disposed on the metal layer while the dry electrode film is being provided at the second speed, and
   the dry electrode film is undisposed on the metal layer while the dry electrode film is being provided at the third speed.
Clause 2. The method of clause 1,
   wherein the first speed of providing the metal layer is a speed of providing the dry electrode,
   the first speed of providing the metal layer and the second speed of providing the dry electrode film are the same as each other, and
   the third speed of providing the dry electrode film is about 10 % to less than 100 %, relative to the second speed of providing the dry electrode film.
Clause 3. The method of clause 1 or clause 2,
   wherein the dry electrode film is a self-standing film,
   the dry electrode film further comprises at least one cutting line introduced along a direction perpendicular to a length direction of the dry electrode film, and
   the dry electrode film comprising the at least one cutting line is supported by a support before being disposed on the metal layer.
Clause 4. The method of any one of clauses 1 to 3,
   wherein the metal layer comprises an interlayer disposed on one side or both sides of the metal layer.
Clause 5. The method of clause 4,
   wherein the metal layer comprises: a plurality of first regions spaced apart from each other along a length direction of the metal layer; and one or more second regions disposed intermittently between the plurality of first regions, and
   from among the plurality of first regions and the one or more second regions, the interlayer is selectively disposed on the plurality of first regions.
Clause 6. The method of clause 5,
   wherein, while the dry electrode film is being provided at the second speed, the dry electrode film is disposed on the interlayer that is selectively disposed on the plurality of first regions, and
   while the dry electrode film is being provided at the third speed, the dry electrode film is undisposed on the second regions of the metal layer.
Clause 7. The method of any one of clauses 1 to 6,
   wherein a total area of the dry electrode active material layer is 99 % or less, relative to a total area of the dry electrode.
Clause 8. The method of any one of clauses 1 to 7,
   wherein the dry electrode active material layer is spaced apart by a first distance at a uniform interval along a length direction of the dry electrode,
   the dry electrode film comprises a plurality of cutting lines introduced along a direction perpendicular to a length direction of the dry electrode film, and
   a second distance between the plurality of cutting lines is about 10 % to less than 100 %, relative to the first distance.
Clause 9. The method of any one of clauses 1 to 8,
   wherein the dry electrode active material layer is spaced apart along a length direction of the dry electrode, and an interval between two adjacent dry electrode active material layers among the dry electrode active material layers spaced apart from each other is less than a width of the dry electrode.
Clause 10. The method of any one of clauses 1 to 9,
   wherein the method is free of removal of the dry electrode film disposed on the metal layer.
Clause 11. The method of any one of clauses 1 to 10,
   wherein one surface of the metal layer adjacent to the dry electrode active material layer is free of burrs or recesses.
Clause 12. The method of any one of clauses 1 to 11,
   wherein the forming of the dry electrode active material layer comprises laminating the dry electrode film and the metal layer.
Clause 13. The method of any one of clauses 1 to 12,
   wherein the forming of the dry electrode active material layer further comprises applying heat, pressure, or a combination thereof to at least one of the dry electrode film and the metal layer.
Clause 14. The method of any one of clauses 1 to 13,
   wherein the forming of the dry electrode active material layer comprises simultaneously introducing, between a first laminator roll and a second laminator roll, the dry electrode film and the metal layer,
   wherein at least one of the first laminator roll and the second laminator roll further comprises a suction hole for mechanically attaching the dry electrode film to the at least one of the first laminator roll and the second laminator roll,
   wherein the dry electrode film, while attached to the at least one of the first laminator roll and the second laminator roll, further comprises one or more cutting lines formed along a machine direction, and
   the at least one of the first laminator roll and the second laminator roll is free of an opening having a length formed along a transverse direction (TD).
Clause 15. The method of clause 14,
   wherein the first laminator roll and the second laminator roll have a first rotation speed while the first region of the metal layer and the dry electrode film are simultaneously introduced between the first laminator roll and the second laminator roll, and
   while the second region of the metal layer is introduced between the first laminator roll and the second laminator roll and the dry electrode film is not provided between the first laminator roll and the second laminator roll, the first laminator roll and the second laminator roll both have the first rotation speed or at least one of the first laminator roll and the second laminator roll has a second rotation speed that is less than the first rotation speed.
Clause 16. The method of clause 4 or clause 5, or any one of clauses 7 to 15 as dependent on clause 4 or clause 5,
   wherein the interlayer comprises a binder,
   wherein the binder comprises at least one selected from a conductive binder and a nonconductive binder,
   the binder comprises a fluorinated binder, and
   a thickness of the interlayer is 30 % or less, relative to a thickness of the metal layer.
Clause 17. The method of any one of clauses 4, 5 or 16, or any one of clauses 7 to 15 as dependent on clause 4 or clause 5,
   wherein the interlayer comprises a conductive material, wherein the conductive material comprises a carbon-based conductive material.
Clause 18. The method of any one of clauses 1 to 17,
   wherein the dry electrode film is free of a residual processing solvent, and
   the dry electrode film comprises a dry electrode active material and a dry binder,
   wherein the dry binder comprises a fibrillized binder, and the dry binder comprises a fluorinated binder, and
   the dry electrode film further comprises a dry conductive material, wherein the dry conductive material comprises a carbon-based conductive material.
Clause 19. The method of any one of clauses 1 to 18,
   wherein, when the dry electrode active material layer is measured by a surface and interfacial measuring analysis system (SAICAS), a change in a vertical relative binding force (F_{VR}) is 300 % or less with respect to a total thickness of the dry electrode active material layer, according to depth from a first point, which is 5 % away from a surface of the dry electrode active material layer in a direction from the surface of the dry electrode active material layer toward the metal layer, to a second point, which is 5 % away from a surface of the metal layer.
Clause 20. The method of any one of clauses 1 to 19,
   wherein, when the electrode active material layer is measured by a surface and interfacial measuring cutting system (SAICAS), a horizontal binding force ratio of a second horizontal binding force (F_{H2}) at a second point, which is 10 % away from a surface of the metal layer, to a first horizontal binding force (F_{H1}) at a first point, which is 10 % away from a surface of the dry electrode active material layer in a direction from the surface of the dry electrode active material layer toward the metal layer, is 50 % or more, wherein the first point and the second point are given with respect to a total thickness of the dry electrode active material layer.
Clause 21. A device for manufacturing a dry electrode, the device comprising
   a first laminator roll and a second laminator roll, spaced apart from each other,
   wherein at least one of the first laminator roll and the second laminator roll has a second rotational peripheral speed and is configured or operated to intermittently have a third rotational peripheral speed less than the second rotational peripheral speed, and
   the first laminator roll and the second laminator roll have opposite rotational directions from each other.
Clause 22. The device of clause 21, further comprising:
   a first winding roll,
   wherein a metal layer is wound on the first winding roll,
   wherein the metal layer is provided, from the first winding roll, at a first speed between the first laminator roll and the second laminator roll,
   wherein from at least one of the first laminator roll and the second laminator roll, a dry electrode film is provided onto the metal layer at a second speed and intermittently at a third speed less than the second speed,
   wherein the dry electrode film is disposed on the metal layer while the dry electrode film is being provided at the second speed, and
   the dry electrode film is undisposed on the metal layer while the dry electrode film is being provided at the third speed.
Clause 23. A dry electrode manufactured according to the method of any one of clauses 1 to 20.
Clause 24. A lithium battery comprising the dry electrode of clause 23.

## Claims

1. A method of preparing a dry electrode, the method comprising:
supplying a metal layer at a first speed;
supplying a dry electrode film at a second speed, while intermittently supplying the dry electrode film at a third speed less than the second speed; and
forming a dry electrode active material layer by intermittently disposing the dry electrode film on at least one side of the metal layer,
wherein the dry electrode film is on the metal layer while the dry electrode film is being supplied at the second speed, and
the dry electrode film is not on the metal layer while the dry electrode film is being supplied at the third speed.

2. The method as claimed in claim 1,
wherein the first speed of supplying the metal layer is a speed of supplying the dry electrode,
the first speed and the second speed are substantially the same as each other, and
the third speed is about 10 % to less than 100 %, relative to the second speed.

3. The method as claimed in claim 1 or claim 2,
wherein the dry electrode film is a self-standing film,
the dry electrode film further comprises at least one cutting line introduced along a direction perpendicular to a length direction of the dry electrode film, and
the dry electrode film comprising the at least one cutting line is supported by a support before being applied on the metal layer.

4. The method as claimed in any one of claims 1 to 3,
wherein the metal layer comprises an interlayer on at least one side of the metal layer;
optionally wherein the metal layer comprises:
a plurality of first regions spaced from each other along a length direction of the metal layer; and
one or more second regions being intermittently between the plurality of first regions, and
from among the plurality of first regions and the one or more second regions, the interlayer is selectively applied on the plurality of first regions;
further optionally wherein, while the dry electrode film is being supplied at the second speed, the dry electrode film is applied on the interlayer that is selectively disposed on the plurality of first regions, and
while the dry electrode film is being supplying at the third speed, the dry electrode film is not on the second regions of the metal layer.

5. The method as claimed in claim 4,
wherein the interlayer comprises a binder,
wherein the binder comprises at least one selected from among a conductive binder and a nonconductive binder,
the binder comprises a fluorinated binder, and
a thickness of the interlayer is 30 % or less, relative to a thickness of the metal layer; and/or
wherein the interlayer comprises a conductive material,
wherein the conductive material comprises a carbon-based conductive material.

6. The method as claimed in any one of claims 1 to 5,
wherein a total area of the dry electrode active material layer is 99 % or less, relative to a total area of the dry electrode.

7. The method as claimed in any one of claims 1 to 6,
wherein the dry electrode active material layer comprises a plurality of dry electrode active material layers spaced from each other by a first distance at a substantially uniform interval along a length direction of the dry electrode,
the dry electrode film comprises a plurality of cutting lines introduced along a direction perpendicular to a length direction of the dry electrode film, and
a second distance between the plurality of cutting lines is about 10 % to less than 100 %, relative to the first distance.

8. The method as claimed in any one of claims 1 to 7,
wherein:
(i) the dry electrode active material layer comprises a plurality of dry electrode active material layers spaced from each other along a length direction of the dry electrode, and an interval between two adjacent dry electrode active material layers among the dry electrode active material layers spaced from each other is less than a width of the dry electrode; and/or
(ii) the method is free of removal of the dry electrode film from the metal layer; and/or
(iii) one surface of the metal layer adjacent to the dry electrode active material layer is free of burrs or recesses; and/or
(iv) the forming of the dry electrode active material layer comprises laminating the dry electrode film and the metal layer; and/or
(v) the forming of the dry electrode active material layer further comprises applying heat, pressure, or a combination thereof to at least one of the dry electrode film or the metal layer.

9. The method as claimed in any one of claims 1 to 8,
wherein the forming of the dry electrode active material layer comprises concurrently introducing, between a first laminator roll and a second laminator roll, the dry electrode film and the metal layer,
wherein at least one of the first laminator roll or the second laminator roll further comprises a suction hole for mechanically attaching the dry electrode film to the at least one of the first laminator roll or the second laminator roll,
wherein the dry electrode film, while attached to the at least one of the first laminator roll or the second laminator roll, further comprises one or more cutting lines formed along a machine direction, and
the at least one of the first laminator roll or the second laminator roll is free of an opening having a length formed along a transverse direction (TD) of the dry electrode film;
optionally wherein the first laminator roll and the second laminator roll each have a first rotation speed while the first region of the metal layer and the dry electrode film are concurrently introduced between the first laminator roll and the second laminator roll, and
while the second region of the metal layer is introduced between the first laminator roll and the second laminator roll and the dry electrode film is not supplied between the first laminator roll and the second laminator roll, the first laminator roll and the second laminator roll both have the first rotation speed or at least one of the first laminator roll or the second laminator roll has a second rotation speed less than the first rotation speed.

10. The method as claimed in any one of claims 1 to 9,
wherein the dry electrode film is free of a residual processing solvent, and
the dry electrode film comprises a dry electrode active material and a dry binder,
wherein the dry binder comprises a fibrillized binder, and the dry binder comprises a fluorinated binder, and
the dry electrode film further comprises a dry conductive material, wherein the dry conductive material comprises a carbon-based conductive material.

11. The method as claimed in any one of claims 1 to 10,
wherein, if the dry electrode active material layer is measured by a surface and interfacial cutting analysis system (SAICAS), then a change in a vertical relative binding force (F_{VR}) is 300 % or less with respect to a total thickness of the dry electrode active material layer, according to depth from a first point, which is 5 % away from a surface of the dry electrode active material layer in a direction from the surface of the dry electrode active material layer toward the metal layer, to a second point, which is 5 % away from a surface of the metal layer in a direction of the dry electrode active material layer; and/or
wherein, if the electrode active material layer is measured by a surface and interfacial cutting analysis system (SAICAS), then a horizontal binding force ratio of a second horizontal binding force (F_{H2}) at a second point, which is 10 % away from a surface of the metal layer in a direction of the dry electrode active material layer, to a first horizontal binding force (F_{H1}) at a first point, which is 10 % away from a surface of the dry electrode active material layer in a direction from the surface of the dry electrode active material layer toward the metal layer, is 50 % or more, wherein the first point and the second point are given with respect to a total thickness of the dry electrode active material layer.

12. A device for manufacturing a dry electrode, the device comprising:
a first laminator roll and a second laminator roll, spaced from each other,
wherein at least one of the first laminator roll or the second laminator roll has a second rotational peripheral speed and is configured to intermittently have a third rotational peripheral speed less than the second rotational peripheral speed, and
the first laminator roll and the second laminator roll have opposite rotational directions from each other.

13. The device as claimed in claim 12, further comprising:
a first winding roll,
wherein a metal layer is wound on the first winding roll,
wherein the metal layer is supplied, from the first winding roll, at a first speed between the first laminator roll and the second laminator roll,
wherein from at least one of the first laminator roll or the second laminator roll, a dry electrode film is supplied onto the metal layer at a second speed and intermittently at a third speed less than the second speed,
wherein the dry electrode film is disposed on the metal layer while the dry electrode film is being supplied at the second speed, and
the dry electrode film is not disposed on the metal layer while the dry electrode film is being provided at the third speed.

14. A dry electrode manufactured according to the method as claimed in any one of claims 1 to 11.

15. A lithium battery comprising the dry electrode as claimed in claim 14.
